# EUROPEAN PATENT APPLICATION

(11) **EP 4 617 805 A1**
(43) Date of publication of application: **17.09.2025**
(21) Application number: 23887921.7
(22) Date of filing: 03.11.2023
(51) Int. Cl.: G05B 19/414

(54) **MOTION CONTROL SYSTEM AND METHODS**

(30) Priority: 08.11.2022 CN 202211392751
(71) Applicant: Beijing Geekplus Technology Co. Ltd, Beijing 100102 (CN)
(72) Inventor: QU, Xinru, Beijing 100102 (CN); PENG, Xingwen, Beijing 100102 (CN); WANG, Kun, Beijing 100102 (CN)
(74) Representative: De Sandre, Emanuele
(86) International application number: PCT/CN2023/129671
(87) International publication number: WO 2024/099231

(57) **Abstract**

A motion control system and methods. The motion control system comprises: a control platform (102) and at least one mobile device (104), the control platform (102) communicating with each mobile device (104) by means of at least two communication links. Upon detecting that a security event is triggered, the control platform (102) is configured to generate an emergency stop instruction, and transmit the emergency stop instruction to the mobile device (104) by means of a first communication link (103), the first communication link (103) being a communication link amongst the at least two communication links having a preset secure communication protocol. The mobile device (104) is configured to receive the emergency stop instruction by means of the first communication link (103), analyze the emergency stop instruction by using the preset security communication protocol, and execute a shutdown operation on the basis of an analysis result. The at least two communication links are provided between the control platform (102) and the mobile device (104), and the emergency stop instruction is transmitted by using the first communication link (103) conforming to the preset security communication protocol, such that the occurrence probability of transmission failure is reduced when the emergency stop instruction is transmitted to the mobile device (104), thus improving the transmission security of the emergency stop instruction.

## Description

### CROSS-REFERENCE TO RELATED APPLICATION

This application claims the priority to Chinese Patent Application No. 202211392751.3, titled "Motion Control System and Method," filed with the China National Intellectual Property Administration on November 8, 2022, the entire contents of which are incorporated herein by reference.

### FIELD

The present invention relates to the technical field of mobile device control, and more particularly to a motion control system. The present invention further relates to a motion control method.

### BACKGROUND

With the development of mobile device technology, more and more mobile devices are widely used in freight, warehousing, logistics, catering and other industrial services, which greatly facilitates human production and life.

In a working scenario of the mobile device, when the mobile device is controlled, a corresponding control signal is transmitted to the mobile device to make the mobile device move according to the control signal. However, when a control signal transmission channel fails or there is a potential safety hazard (the control signal is at risk of being tampered with), the mobile device cannot be managed through the control signal transmission, potentially resulting in a risk of robot loss of control. Therefore, a safe motion control method is urgently needed.

### SUMMARY

In view of this, an embodiment of the present invention provides a motion control system to solve technical defects existing in the related art. An embodiment of the present invention further provides a motion control method.

According to a first aspect of embodiments of the present invention, a motion control system is provided. The motion control system includes a control platform, and at least one mobile device. The control platform communicates with each mobile device via at least two communication links. The control platform is configured to generate an emergency stop instruction in a case that it is detected that a safety event has been triggered, and transmit the emergency stop instruction to the mobile device via a first communication link. The emergency stop instruction complies with a preset safety communication protocol, and the first communication link is a communication link with the preset safety communication protocol among the at least two communication links. The mobile device is configured to receive the emergency stop instruction via the first communication link, parse the emergency stop instruction by using the preset safety communication protocol, and execute a shutdown operation according to a parsing result.

According to a second aspect of embodiments of the present invention, a motion control method is provided, which is applied to a motion control system. The motion control system includes a control platform and at least one mobile device. The control platform communicates with each mobile device via at least two communication links. The motion control method includes generating, by the control platform, an emergency stop instruction in a case that it is detected that a safety event has been triggered, and transmitting, by the control platform, the emergency stop instruction to the mobile device via a first communication link, in which the emergency stop instruction complies with a preset safety communication protocol, and the first communication link is a communication link with the preset safety communication protocol among the at least two communication links, and receiving, by the mobile device, the emergency stop instruction via the first communication link, parsing, by the mobile device, the emergency stop instruction by using the preset safety communication protocol, and executing, by the mobile device, a shutdown operation according to the parsing result.

According to a third aspect of embodiments of the present invention, a motion control method is provided, which is applied to a control platform. The motion control method includes generating an emergency stop instruction in a case that it is detected that a safety event has been triggered, and transmitting the emergency stop instruction to a mobile device via a first communication link. The emergency stop instruction complies with a preset safety communication protocol, and the first communication link is a communication link with the preset safety communication protocol among at least two communication links between the control platform and the mobile device.

According to a fourth aspect of embodiments of the present invention, a motion control method is provided, which is applied to a mobile device. The motion control method includes receiving an emergency stop instruction transmitted by a control platform via a first communication link, in which the first communication link is a communication link with a preset safety communication protocol among at least two communication links between the control platform and the mobile device, and the emergency stop instruction complies with the preset safety communication protocol, and parsing the emergency stop instruction by using the preset safety communication protocol, and executing a shutdown operation according to a parsing result.

A motion control system provided in the present invention includes a control platform and at least one mobile device. The control platform communicates with each mobile device via at least two communication links. The control platform is configured to generate an emergency stop instruction in a case that it is detected that a safety event has been triggered, and transmit the emergency stop instruction to the mobile device via a first communication link. The first communication link is a communication link with a preset safety communication protocol among the at least two communication links. The mobile device is configured to receive the emergency stop instruction via the first communication link, parse the emergency stop instruction by using the preset safety communication protocol, and execute a shutdown operation according to a parsing result. By setting the at least two communication links between the control platform and the mobile device, in the case that it is detected that the safety event has been triggered, the control platform is configured to generate the emergency stop instruction complying with the preset safety communication protocol, and transmit the emergency stop instruction to the mobile device via the first communication link with the preset safety communication protocol. After receiving the emergency stop instruction transmitted by the first communication link, the mobile device is configured to parse the emergency stop instruction, and execute the shutdown operation according to the parsing result. That is, the first communication link is set for the emergency stop instruction, and the emergency stop instruction is transmitted by using a different communication link than other communication signals. The transmission of the emergency stop instruction is protected by the preset safety communication protocol, thus reducing an occurrence probability of transmission failure or error when the emergency stop instruction is transmitted to the mobile device, and improving the safety of the transmission of the emergency stop instruction.

### BRIEF DESCRIPTION OF THE DRAWINGS

The accompanying drawings herein, which are incorporated in and constitute a part of this specification, illustrate embodiments of the present invention and, together with the description, serve to explain the principles of the present invention.
FIG. 1 is a schematic diagram showing a motion control system provided in an embodiment of the present invention.
FIG. 2 is a flow chart showing interactions under a motion control system architecture provided in an embodiment of the present invention.
FIG. 3 is a schematic diagram showing an execution mechanism in a motion control system provided in an embodiment of the present invention.
FIG. 4 is a detailed schematic diagram showing a motion control system provided in an embodiment of the present invention.
FIG. 5 is a schematic diagram showing a circuit 14 in FIG. 4 provided in an embodiment of the present invention.
FIG. 6 is a schematic diagram showing a refinement of FIG. 5 provided in an embodiment of the present invention.
FIG. 7 is a flow chart showing a motion control method provided in an embodiment of the present invention.
FIG. 8 is a flow chart showing interactions of an execution mechanism under a motion control system architecture provided in an embodiment of the present invention.
FIG. 9 is a flow chart showing interactions of an execution mechanism under another motion control system architecture provided in an embodiment of the present invention.
FIG. 10 is a schematic diagram showing a data flow of a motion control system provided in an embodiment of the present invention.
FIG. 11 is a schematic diagram showing a data flow of another motion control system provided in an embodiment of the present invention.
FIG. 12 is a flow chart showing a motion control method provided in an embodiment of the present invention.
FIG. 13 is a flow chart showing a motion control method applied to a control platform provided in an embodiment of the present invention.
FIG. 14 is a flow chart showing a motion control method applied to a mobile device provided in an embodiment of the present invention.
FIG. 15 is a block diagram showing a control platform provided in an embodiment of the present invention.
FIG. 16 is a block diagram showing a mobile device provided in an embodiment of the present invention.

### DETAILED DESCRIPTION

Numerous details are set forth in the following description to facilitate a full understanding of the present invention. However, the present invention may be implemented in many other ways different from those described herein, and those skilled in the art may make similar generalizations without departing from the contents of the present invention, so the present invention is not limited by embodiments disclosed below.

Terms used in one or more embodiments of the present invention are only for the purpose of describing embodiments, but should not be construed to limit one or more embodiments of the present invention. As used in one or more embodiments of the present invention and the appended claims, "a/an," "the," and "said" in singular forms are intended to include plural forms, unless clearly indicated in the context otherwise. It should also be understood that the term "and/or" used in one or more embodiments of the present invention represents and contains any one or all possible combinations of one or more associated listed items.

It is to be understood that, although terms such as first, second, and the like may be used in one or more embodiments of the present invention for describing various information, these information should not be limited by these terms. These terms are only used for distinguishing information of the same type from each other. For example, the first may also be referred to as the second, and similarly, the second may also be referred to as the first, without departing from the scope of one or more embodiments of the present invention.

First, terms involved in one or more embodiments of the present invention are explained.

ISO 3691-4: currently the only international standard for industrial driverless vehicles.

Three stop categories: stop category 0 is a stop that is achieved by cutting off a power supply to a machine immediately, that is, the stop is an uncontrolled stop; stop category 1 is a controlled stop, in which a power supply to an execution mechanism (for example actuator) of a machine is maintained to allow the machine to gradually stop, and the power supply is cut off only when the machine is completely stopped; and stop category 2 is a controlled stop, in which a power supply to a drive unit of a machine is maintained at all times.

A network segment generally refers to a group of devices within a computer network that can communicate directly at a same physical layer.

Transparent transmission, namely pass-through, refers to a communication process that transmits a content from a source address to a destination address without making any changes to the business data content, regardless of the business content being transmitted.

System software refers to a system that controls and coordinates computers and peripheral devices, supports the development and execution of application software, and constitutes a collection of programs operating without user intervention, with main function including scheduling, monitoring, and maintaining a computer system.

Automated Guided Vehicle (AGV), also known as an unmanned transport vehicle, is characterized by unmanned driving. Equipped with an automatic navigation system, the AGV can automatically drive along a predefined path without manual intervention, and automatically transport goods or materials from an origin point to a designated destination.

Wireless Fidelity (WIFI), also known as mobile hotspot, represents wireless fidelity and typically appears only in its abbreviated form.

Grating is an optical device composed of a large number of parallel slits with equal width and equal spacing.

Internet Protocol (IP) Address, also known as an Internetworking Protocol Address, is a unified address format provided by an IP protocol. The IP protocol is a protocol designed for computer networks to connect to each other for communication.

CIP Safety Protocol constitutes an extension of the common industrial protocol (CIP) standard capabilities, designed for functionally safe applications. A model is extended by adding CIP safety application layer functions, guaranteeing that a safety system either execute a correct behavior or transition to a predefined safe state within a known time during normal communication or when an error occurs.

Profisafe Protocol is a fail-safe protocol that integrates standard fieldbus technology and fail-safe technology into a single system. This enables the coexistence of fail-safe communication and standard communication over a same cable, achieving fail-safe communication without requiring redundant cables.

Peripheral Component Interface Extend (PCIE) Bus is a tree-structured interface bus that mainly designed to provide a central processing unit (CPU) with a bus interface for accessing a peripheral device.

EtherNet/IP is a modern standard protocol for data encapsulation for use the CIP protocol in Ethernet.

Controller Area Network (CAN) is a serial communication protocol bus for real-time applications, and is one of the most widely used fieldbuses in the world.

In an existing AGV application scenario, both an AGV scheduling instruction and an emergency stop instruction of a system are transmitted via a same wireless link before multiple AGVs in a system end and a site. Under this communication architecture, the AGV scheduling instruction and the emergency stop instruction of the system interact via a data link layer, lacking the protection of additional safety measures. That is, the emergency stop instruction of the system has a same error probability as the AGV scheduling instruction, which brings about a problem that a system emergency stop function cannot be implemented reliably, and cannot meet a requirement of relevant safety standards for a safety level required for emergency stops.

Further, multiple AGVs operate at high speeds under system scheduling. When an abnormal situation occurs, a server receives a request, and issues an emergency stop instruction of a system through software control, and wirelessly sends the emergency stop instruction of the system to each AGV in the site. An AGV that receives the instruction stops immediately. This transmission mode of the emergency stop instruction makes the emergency stop instruction lack protection of a safety communication layer, and a possibility that the instruction may be tampered with and damaged exists, resulting in the AGV not receiving a correct emergency stop instruction, resulting in the AGV being unable to stop in time, and causing risks.

In order to solve the above-mentioned technical problems, a motion control system provided in the present invention includes a control platform and at least one mobile device. The control platform communicates with each mobile device via at least two communication links. The control platform is configured to generate an emergency stop instruction in a case that it is detected that a safety event has been triggered, and transmit the emergency stop instruction to the mobile device via a first communication link. The first communication link is a communication link with a preset safety communication protocol among the at least two communication links. The mobile device is configured to receive the emergency stop instruction via the first communication link, parse the emergency stop instruction by using the preset safety communication protocol, and execute a shutdown operation according to a parsing result. By setting the at least two communication links between the control platform and the mobile device, in the case that it is detected that the safety event has been triggered, the control platform is configured to generate the emergency stop instruction complying with a preset safety communication protocol, and transmit the emergency stop instruction to the mobile device via the first communication link with the preset safety communication protocol. After receiving the emergency stop instruction transmitted by the first communication link, the mobile device parses the emergency stop instruction, and executes the shutdown operation according to the parsing result. That is, the first communication link is set for the emergency stop instruction, and the emergency stop instruction is transmitted by using a different communication link than other communication signals. The transmission of the emergency stop instruction is protected by the preset safety communication protocol, thus reducing an occurrence probability of transmission failure or error when the emergency stop instruction is transmitted to the mobile device, and improving the safety of the transmission of the emergency stop instruction. Further, the safe transmission mode of the emergency stop instruction provided in the present invention may comply with relevant safety standards and be within a required acceptable range, that is, the first communication link for transmitting the emergency stop instruction may meet safety level requirements specified in the ISO 3691-4 standard in the field of unmanned industrial vehicles.

A motion control system is provided in the present invention, and the present invention further relates to a motion control method. Embodiments will be described below in detail one by one.

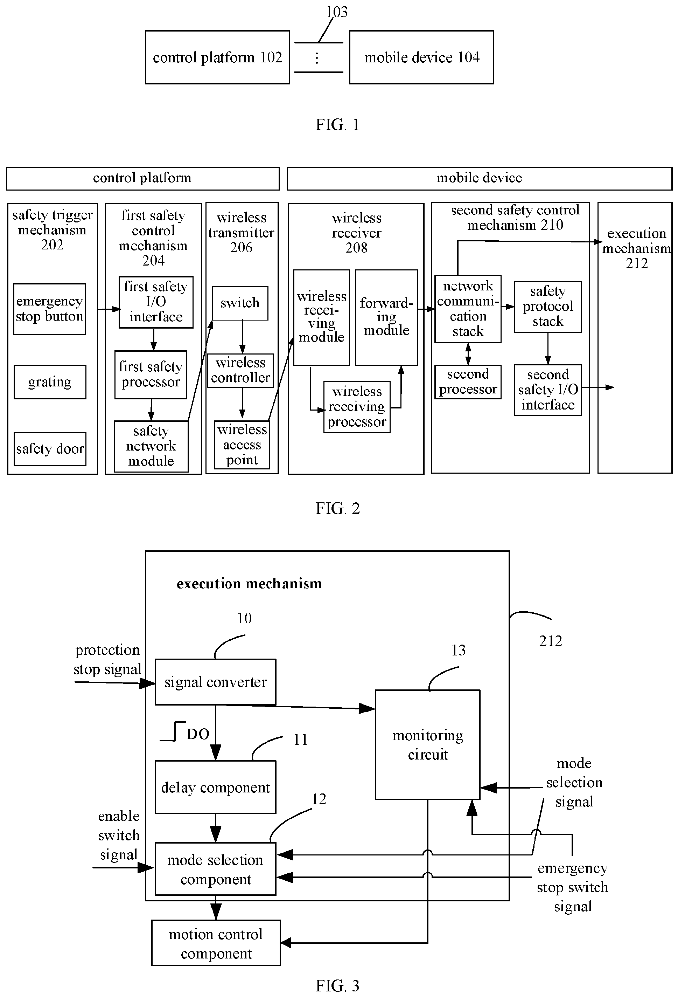

Referring to FIG. 1, FIG. 1 is a schematic diagram showing a motion control system provided in an embodiment of the present invention. The motion control system includes a control platform 102 and at least one mobile device 104. Taking a mobile device 104 as an example, the control platform 102 communicates with the mobile device 104 via at least two communication links. A first communication link 103 is as follows.

The control platform 102 is configured to generate an emergency stop instruction in a case that it is detected that a safety event has been triggered, and transmit the emergency stop instruction to the mobile device 104 via a first communication link 103. The emergency stop instruction complies with a preset safety communication protocol, and the first communication link 103 is a communication link with the preset safety communication protocol among the at least two communication links. The mobile device 104 is configured to receive the emergency stop instruction via the first communication link 103, parse the emergency stop instruction by using the preset safety communication protocol, and execute a shutdown operation according to a parsing result.

Specifically, the control platform is a platform for controlling a plurality of mobile devices. For example, in a warehouse management scenario, an AGV operational zone exists, which may contain a plurality of AGVs. A control platform is arranged outside the AGV operational zone to monitor and control the AGVs. The control platform may be composed of at least one physical hardware, and the control platform performs control operations including, but not limited to control movement, control handling, control deceleration, control shutdown, etc. By controlling the mobile device, scheduling and stopping of the mobile device may be realized. For example, the control platform may include a server that generates a scheduling instruction (the scheduling instruction is specifically generated by software on the server), and may also include a safety controller that generates the emergency stop instruction (the emergency stop instruction is specifically generated by the safety controller in response to triggering of the safety event). Accordingly, the mobile device is a device that may move or stop autonomously according to an instruction from the control platform. For example, the mobile device may be a robot, an AGV cart, etc. An autonomous mobile device may perform a corresponding operation according to the instruction from the control platform, and control of a robot device by the control platform may be realized.

Accordingly, the safety event is a condition required for a safe operation of a device. For example, the safety event having been triggered may be an emergency stop button in an area of the mobile device having been pressed, a detection that a grating has been blocked or a safety door lock has been opened, etc. After these events have been triggered, the mobile device in a corresponding operational zone needs to perform a corresponding operation, namely an emergency stop operation. When it is detected that the safety event has been triggered, the control platform may generate the emergency stop instruction and transmit the emergency stop instruction to the mobile device, and the mobile device performs the corresponding emergency stop operation. That is, by detecting whether the safety event has been triggered, in the case that the safety event has been triggered, the corresponding operation may be quickly performed to prevent a processing flow corresponding to the safety event from not being generated. The emergency stop instruction is an instruction containing information to make the mobile device perform an emergency stop. According to the emergency stop instruction, the mobile device may perform the emergency stop operation in any state until the mobile device stops.

Further, the communication link is a signal transmission channel between two nodes, and the communication link may be a wireless communication link and may also be a wired communication link. In the motion control system, the at least two communication links exist between the control platform and the mobile device. The first communication link is a link with the preset safety communication protocol, and the first communication link is protected by the preset safety communication protocol, so that the emergency stop instruction complying with the preset safety communication protocol may be protected by the preset safety communication protocol when transmitted via the first communication link, and the emergency stop instruction is transmitted by using a different communication link than other instructions. For example, the scheduling instruction may be transmitted by a second communication link different from the first communication link. The preset safety communication protocol is a safety communication protocol that is set in advance to protect the first communication link. By adding the preset safety communication protocol to the first communication link, when the emergency stop instruction is transmitted from the control platform to the mobile device, and the first communication link is used simultaneously, the first communication link is further protected, avoiding a problem that when the same communication link is shared with other instructions, the emergency stop instruction cannot be transmitted due to the occurrence of other instructions.

Optionally, the preset safety communication protocol is usually a CIP safety protocol, a Profisafe protocol, and other safety communication protocols.

Based on this, when it is detected that the safety event has been triggered, the control platform responds quickly and generates the emergency stop instruction complying with the preset safety communication protocol, so that the emergency stop instruction may be transmitted via the first communication link with the preset safety communication protocol. Then, the control platform transmits the emergency stop instruction to the mobile device via the first communication link, and the mobile device receives the emergency stop instruction via the first communication link. Since the emergency stop instruction complies with the preset safety communication protocol when it is generated, the instruction is parsed in advance to obtain the parsing result when the mobile device needs to execute the corresponding operation according to the instruction, and then the corresponding shutdown operation is executed according to the parsing result. The shutdown operation may be an operation of causing the mobile device to execute a deceleration stop, and may also be an operation of causing the mobile device to execute a shutdown.

Referring to FIG. 2, FIG. 2 is a flow chart showing interactions under a motion control system architecture provided in an embodiment of the present invention.

In an optional embodiment of the present invention, the control platform includes a safety trigger mechanism 202 and a first safety control mechanism 204. The safety trigger mechanism 202 is configured to generate a safety event trigger signal and send the safety event trigger signal to the first safety control mechanism 204 when an event complying with a safety trigger condition is identified. The first safety control mechanism 204 is configured to receive the safety event trigger signal sent by the safety trigger mechanism 202, encode the safety event trigger signal by using the preset safety communication protocol to obtain the emergency stop instruction, and transmit the emergency stop instruction to the mobile device via the first communication link.

Specifically, the safety trigger mechanism 202 is a mechanism that generates the safety event by triggering, for example, the trigger may be pressing an emergency stop button, opening a safety door, and so on. The safety trigger mechanism 202 may be the emergency stop button, the safety door, a grating, etc. The safety event is triggered by the safety trigger mechanism 202, and the control platform and the mobile device perform subsequent processing according to the safety event.

Optionally, before the safety event is triggered by the safety trigger mechanism 202, the safety trigger mechanism 202 may output a signal continuously and reliably. When the safety event is triggered, an output signal disappears or changes suddenly. It may also be that the safety trigger mechanism 202 does not output a signal, and when the safety event is triggered, the safety trigger mechanism 202 generates an output signal suddenly.

Optionally, triggering of the safety trigger mechanism 202 may be in a variety of ways. In a possible implementation, the safety trigger mechanism 202 is the emergency stop button, and the emergency stop button uses a dual-circuit pulse. That is, two power supplies provide input and output to the emergency stop button. Specifically, before an operator presses the emergency stop button, the emergency stop button is supplied with a low pulse and output a low level by a circuit 1. When the emergency stop button is pressed, current is supplied to the emergency stop button by a circuit 2, providing a high pulse output high level. In another possible implementation, the safety trigger mechanism 202 may be the safety gate or the grating, and both the safety gate and the grating use signals of an output signal switch device (OSSD). Before the safety gate is opened or the grating is blocked, the output signal switch device is in a closed state, that is, the safety gate and the grating do not output a signal, and after the safety gate is opened or the grating is blocked, an output signal changes to a high level or a low level signal suddenly.

Specifically, the first safety control mechanism 204 is a main control mechanism in the control platform for controlling the movement and stop of the mobile device, and is configured to respond in time when itself or a device connected to the control platform fails or generates a sudden signal. For example, when it is detected that the safety trigger mechanism 202 has been triggered and the safety event has occurred, the emergency stop instruction is generated and is transmitted to the mobile device, so as to avoid the failure to handle in time when the device fails or mutates. Referring to FIG. 2, the safety event trigger signal is a signal generated when the safety trigger mechanism 202 is triggered, for example, the emergency stop button is pressed, the grating is blocked, and the safety door is opened and activated, etc.

Encoding the safety event trigger signal by using the preset safety communication protocol may be encoding the safety event trigger signal by programmable logic in the first safety control mechanism 204, so as to obtain the emergency stop instruction complying with the CIP safety protocol's safety format.

Optionally, referring to FIG. 2, the first safety control mechanism 204 may include a first safety input/output (I/O) interface, a first safety processor and a safety network module. The first safety input/output interface is configured to receive the safety event trigger signal generated by the safety trigger mechanism 202, and provide the safety event trigger signal received to the first safety processor for processing. The first safety processor, through a response of programmable logic, is configured to encode the safety event trigger signal into the emergency stop instruction complying with the CIP safety protocol's safety format by using the preset safety communication protocol. Before encoding the safety event trigger signal, it needs to check the signal, such as redundancy detection, deleting or extracting a repeated or erroneous trigger signal; data integrity verification, in which a received trigger signal shows that the emergency stop button is only half pressed, and by checking a pressed event, it is determined whether the safety event is actually triggered and generated; timeout detection, in which it is determined whether a transmission time of the safety event trigger signal from the safety trigger mechanism 202 to the first control execution mechanism has timed out, for example, a preset time threshold may be 0.01 seconds, and a detected time is compared with the preset time threshold to determine whether it has timed out; and connection authorization detection, which may be to detect whether the mobile device to be controlled is connected to the control platform, and if a detection result is authorized, subsequent processing continues. The safety network module is configured to send a corresponding instruction in a form of a network port, that is, the emergency stop instruction or a reset instruction.

According to a solution of an embodiment of the present invention, the control platform includes the safety trigger mechanism 202 and the first safety control mechanism 204. It is determined whether the safety event has been triggered or not by the safety trigger mechanism 202. In the case that the safety event has been triggered, the first safety control mechanism 204 is configured to encode the generated safety event to generate the emergency stop instruction, so that when the safety event has been triggered at the control platform, the control platform may process the safety event trigger signal corresponding to the safety event directly, and generate an instruction that the mobile device may execute an operation directly according to the instruction, thus improving a response efficiency of the safety event having been triggered and further improving a transmission efficiency of the emergency stop instruction.

In an optional embodiment of the present invention, the control platform includes a wireless transmitter 206.

The wireless transmitter 206 is configured to forward the emergency stop instruction to a destination port, convert the emergency stop instruction into a wireless signal via the destination port, and transmit the wireless signal to the mobile device. The destination port is a port for data transmission between the control platform and the mobile device via the first communication link.

Specifically, the wireless transmitter 206 is configured to transmit the wireless signal. That is, a received emergency stop instruction is converted into the wireless signal and then the wireless signal is transmitted. Referring to FIG. 2, the wireless transmitter 206 may include a switch, a wireless controller and a wireless access point. The switch is configured to receive the emergency stop instruction and forward the emergency stop instruction to the wireless controller and the wireless access point. The emergency stop instruction is processed by the wireless controller and the wireless access point to obtain the emergency stop instruction in a form of the wireless signal, and the wireless signal is transmitted to the mobile device via the first communication link. The destination port is the port for data transmission between the control platform and the mobile device via the first communication link.

According to a solution of an embodiment of the present invention, the wireless transmitter is configured to convert the emergency stop instruction into the wireless signal that may be transmitted by the wireless transmitter, so that the emergency stop instruction may be transmitted wirelessly from the control platform to the mobile device via the first communication link. The transmission efficiency is improved by a wireless transmission, and the emergency stop instruction is transmitted via the first communication link, which provides a guarantee for the wireless transmission and further improves the safety of transmitting the emergency stop instruction.

In an optional embodiment of the present invention, the control platform further includes a network address translation device. The wireless transmitter is further configured to send the emergency stop instruction to the network address translation device. The network address translation device is configured to perform address translation on the emergency stop instruction, forward an address translated emergency stop instruction to the destination port, and transmit the address translated emergency stop instruction to the mobile device in a form of a wireless signal via the destination port.

Specifically, a network address translation (NAT) device is a virtual network address translator that performs an internal address translation for cross-network segment communication. That is, a network address of data sent by the wireless transmitter is converted into a target network address that complies with a network address corresponding to the mobile device, thus obtaining data complying with a target network address of the mobile device.

Illustratively, in a cross-network segment scenario, the control platform includes the wireless transmitter and the network address translation device, and the wireless signal is transmitted between the control platform and the mobile device. The mobile device and the wireless transmitter belong to different network segments, respectively. If an IP address of the wireless transmitter belongs to a first network segment, and an IP address of the mobile device belongs to a second network segment, the network address translation device is needed and is configured to convert a signal sent by the wireless transmitter from the IP address of the first network segment to the corresponding IP address of the second network segment, so that conversion and transmission of the signal across network segments is completed, and transmission of the signal between the control platform and the mobile device belonging to the different network segments may be realized via the network address translation device.

According to a solution of an embodiment of the present invention, the control platform further includes the network address translation device. When the control platform and the mobile device belong to the different network segments, the transmission of the signal between the control platform and the mobile device may be realized via the network address translation device, so that the mobile device may perform a subsequent corresponding operation according to the received instruction.

In an optional embodiment of the present invention, the mobile device includes a wireless receiver. The wireless receiver is configured to receive the wireless signal via the first communication link, and convert the wireless signal to the emergency stop instruction in an Ethernet port format.

Referring to FIG. 2, the wireless receiver 208 is configured to receive the wireless signal and convert the received wireless signal into the emergency stop instruction in the Ethernet format. The wireless receiver 208 may include a wireless receiving module, a wireless receiving processor and a forwarding module. The wireless receiving module is configured to receive the wireless signal sent from the wireless transmitter 206 in the control platform and forward the wireless signal to the wireless receiving processor. A way of forwarding the wireless signal to the wireless receiving processor may be forwarding the wireless signal via a PCIE bus. The wireless receiving processor is configured to transparently transmit the received wireless signal to the forwarding module, and the forwarding module is configured to process the received wireless signal. The forwarding module is configured to convert the received wireless signal into the emergency stop instruction in the Ethernet port format and output the emergency stop instruction.

According to a solution of an embodiment of the present invention, the wireless receiver of the mobile device converts the received wireless signal into the emergency stop instruction in the Ethernet port format and forwards the emergency stop instruction. That is, when initially receiving the wireless signal, the mobile device first converts the wireless signal into a signal in a format that may be recognized by the mobile device when executing an operation, so as to facilitate to execute the subsequent shutdown operation according to the emergency stop instruction in the Ethernet port format.

In an optional embodiment of the present invention, the mobile device includes a second safety control mechanism 210 and an execution mechanism 212. The second safety control mechanism 210 is configured to parse the emergency stop instruction by using the preset safety communication protocol to obtain the parsing result, and send the parsing result to the execution mechanism 212. The execution mechanism 212 is configured to execute the shutdown operation according to the parsing result.

Specifically, the second safety control mechanism 210 is a mechanism of the mobile device that controls the mobile device to execute an operation based on the instruction from the control platform. The instruction received from the control platform is parsed by using the preset safety communication protocol, and the parsing result is output. For example, when processing the emergency stop instruction from the control platform, the second safety control mechanism 210 may parse the emergency stop instruction to obtain the parsing result, so that the mobile device may execute the shutdown operation according to the parsing result. The execution mechanism 212 is a mechanism of the mobile device that executes an operation according to the instruction. For example, when receiving the emergency stop instruction, the execution mechanism 212 executes the shutdown operation or a deceleration stop operation according to the emergency stop instruction. When receiving a scheduling instruction, the execution mechanism 212 executes a corresponding operation.

Optionally, referring to FIG. 2, the second safety control mechanism 210 may include a network communication stack, a second processor, a safety protocol stack and a second safety input/output interface. The network communication stack is an Ethernet/IP communication stack module, and is configured to receive a control instruction, and filter and identify a received control instruction. If the network communication stack identifies that the control instruction is a safety instruction received from the first communication link, the safety instruction is taken the emergency stop instruction, and the emergency stop instruction is forwarded to the safety protocol stack. The safety protocol stack is configured to parse the emergency stop instruction complying with the preset safety communication protocol by using the preset safety communication protocol to obtain the parsing result, and then output the parsing result in a form of input/output quantities (for example, I/O Signal Mapping Format) safely via the second safety input/output interface. The second processor is configured to configure initialization information of the network communication stack, collect status information and fault information of internal modules included in the second safety control mechanism 210, and output initial status information, fault information, and the like of each module inside the second safety control mechanism 210.

According to a solution of an embodiment of the present invention, the mobile device includes the second safety control mechanism 210 and the execution mechanism 212. When receiving the emergency stop instruction, the second safety mechanism processes the emergency stop instruction to determine that the emergency stop instruction is the safety instruction, and forwards the safety instruction to the execution mechanism 212, and the execution mechanism 212 performs the corresponding operation according to the emergency stop instruction, so that further determination of the emergency stop instruction is realized and then the corresponding operation is executed. That is, an accuracy of the transmission of the emergency stop instruction is improved.

In an optional embodiment of the present invention, the execution mechanism 212 includes a delay component, a movement controller, a safety driver, a motor and a speed encoder. The movement controller is configured to obtain a current moving speed of the mobile device in response to the parsing result of the emergency stop instruction, predict motor deceleration information according to the current moving speed, and send the motor deceleration information to the safety driver. The safety driver is configured to drive the motor to decelerate according to the motor deceleration information. The delay component is configured to send a power-off instruction to the safety driver in respond to the parsing result of the emergency stop instruction, in a case that a preset delay time is reached. The safety driver is further configured to drive the motor to power off and brake according to the power-off instruction. The speed encoder is configured to acquire a current rotation speed of the motor and feed back the current rotation speed to the movement controller. The movement controller is further configured to generate alarm information in a case that the current rotation speed does not match a preset rotation speed.

Specifically, the movement controller is a controller that controls the execution mechanism 212 of the mobile device, and is configured to respond to the parsing result of the emergency stop instruction, obtain the current moving speed of the mobile device, and predict the motor deceleration information according to the parsing result and the current moving speed. The motor deceleration information may be predicted motor deceleration information, according to the current speed, that causes the execution mechanism 212 to execute the emergency shutdown operation according to the parsing result and does not harm the mobile device. The motor deceleration information is predicted acceleration information or a motor speed of the motor to decelerate the mobile device. The safety driver is a device of the mobile device that drives the motor of the mobile device based on the instruction from the movement controller, that is, the safety driver is configured to drive the motor to decelerate according to the motor deceleration information, to make the mobile device decelerate and stop. The delay component is a device that controls a delayed shutdown of the motor. For example, the preset delay time may be set for the delay component, and when the preset delay time is reached, the delay component sends the power-off instruction to the motor. The delay time is usually set according to a resistance value adjusted by a dip switch, which is completed by a hardware circuit. A default time is 2 seconds, which may be adjusted according to different ground conditions and speed requirements of each project. The power-off instruction may be an instruction to make the motor power off, stop, brake, etc.

Further, according to the delay component, in the case that the preset delay time is reached, the safety driver also drives the motor to power off and brake in respond to the power-off instruction sent by the delay component. When the motor is powered off and braked based on the safety driver, the speed encoder is configured to acquire a real-time rotation speed of the motor during a process of decelerating the motor until it stops. The motor needs a series of actions such as deceleration, stopping, shutting down and braking to power off and brake the motor. The movement controller is further configured to match the current rotation speed obtained in real-time with the preset rotation speed, and generate the alarm information in the case that the current rotation speed does not match the preset rotation speed. For example, at the third second of motor deceleration, if the preset rotation speed is 3 and the current rotation speed is 2.8, it is determined that there is a mismatch and the alarm information is generated.

According to a solution of an embodiment of the present invention, the execution mechanism includes the delay component, the movement controller, the safety driver, the motor and the speed encoder. The movement controller predicts the motor deceleration information, the speed encoder acquires the current rotation speed of the motor, and the movement controller determines whether the current rotation speed of the motor matches the preset rotation speed, so as to determine whether to generate the alarm information. The delay component sets the preset delay time, and when the preset delay time is reached, regardless of whether the motor has decelerated and stopped to zero speed, the safety driver drives the motor to cut off the power and brake, so as to prevent the mobile device from failing to execute the shutdown operation within the preset time after receiving the emergency stop instruction, and causing greater losses.

In an optional embodiment of the present invention, the execution mechanism 212 further includes a signal converter. The signal converter is configured to convert the parsing result of the emergency stop instruction into an initial safety signal that complies with a target safety performance level, and output the initial safety signal to the delay component. The target safety performance level is a safety performance level of the mobile device. The delay component is further configured to send the power-off instruction to the safety driver according to the initial safety signal, in the case that the preset delay time is reached.

Before a mechanical device is put into use, a risk assessment of a device may be conducted according to a mechanical safety standard to determine a risk level and a corresponding performance level (PL) of the mechanical device. After that, a safety component with a matching performance level may be deployed in the mechanical device. For example, an autonomous mobile robot (AMR), a mobile device that may move automatically (hereinafter referred to as "mobile device"), is widely used in various fields, such as the field of intelligent warehousing. Control of the mobile device includes safety stop control. Stop of the mobile device is divided into three categories: stop category 0: power is cut off directly and a brake is mechanically held; stop category 1: a machine stops with electronic braking (a speed is monitored during the process), and then power is cut off and a brake is mechanically held; stop category 2: a machine stops with electronic braking, and zero speed is static monitored, and if a threshold is exceeded, power is cut off and a brake is mechanically held.

For stop category 1, safety protection control is performed on the mobile device by deploying the safety driver and the like at the mobile device. However, the cost of deploying the safety driver at the mobile device is high. In addition, the performance level of the mobile device is, for example, a first level, and the performance level of the control component such as the safety driver is, for example, a second level, which affects a safety protection effect of the mobile device.

The risk assessment of the device according to the mechanical safety standard may be to assess an average probability of dangerous failure per hour of the mobile device. Generally, according to results of the risk assessment, five performance levels (PLs) are divided accordingly. The five PLs include PLa, PLb, PLc, PLd and PLe in an ascending order, in which PLa is a lowest level among the five PLs, with a highest average probability of dangerous failure per hour and a worst safety, and PLe is a highest level among the five PLs, with a lowest average probability of dangerous failure per hour and a best safety.

For example, a PL of a mobile device used in an intelligent warehouse scenario is, for example, the PLd level. During use, a behavior of the mobile device may be controlled according to requirements of the scenario. For example, the mobile device is controlled to stop, and a corresponding control device shall be a safety control device complying with the PLd level. In some embodiments, the control device is deployed in the mobile device, and a control mechanism complying with a certain PL includes the safety driver and a safety laser radar, or the safety driver and a speed encoder. In this way, not only the cost of control components is increased, but also a PL of the control mechanism composed of the safety driver and the speed encoder is a PLe level, which is higher than the PLd level of the mobile device, resulting in a certain waste of resources.

A stop category corresponding to the embodiment of the present invention is stop category 1. A control process of stop category 1 includes within the preset delay time, sending the power-off instruction to the safety driver via the delay component of the mobile device to electronically brake the mobile device to a speed of 0. After the delay time is reached, a safe torque off (STO) signal is outputted to the safety driver, and a safety torque is turned off (that is, the motor is powered off) and a mechanical brake is performed.

The execution mechanism 212 according to an embodiment of the present invention is described below in conjunction with FIGS. 3 to 8.

As shown in FIG. 3, in an embodiment of the present invention, the execution mechanism 212 may include the signal converter 10, the delay component 11 (for example a delay circuit), a mode selection component 12, and a monitoring circuit 13. The signal converter 10 is a circuit of the target safety performance level. The target safety performance level is the safety performance level of the mobile device. The mobile device involved here is the mobile device controlled by the execution mechanism 212. As shown in FIG. 3, the execution mechanism 212 according to the embodiment of the present invention may include the signal converter 10, the delay component 11 (for example the delay circuit), the mode selection component 12, and the monitoring circuit 13.

The signal converter 10 is configured to convert the parsing result of the emergency stop instruction into the initial safety signal that complies with the target safety performance level, and output the initial safety signal to the delay component 11. The target safety performance level is the safety performance level of the mobile device. The signal converter 10 is the circuit of the target safety performance level.

The delay component 11 is further configured to send the power-off instruction to the safety driver according to the initial safety signal, in the case that the preset delay time is reached.

The monitoring circuit 13 is configured to transmit a monitoring result to a mobile device controller in a case that a first level signal of an initial protection stop signal output by the signal converter 10 is monitored, to make the mobile device controller trigger a motion control component to control the mobile device to stop safety. The monitoring circuit 13 may be further configured to monitor a mode selection signal and an emergency stop switch signal.

In some embodiments, a signal input to the signal converter 10 may come from the control platform that controls the mobile device.

Illustratively, the target safety performance level is, for example, the PLd level. Accordingly, the signal converter 10 may be implemented as a PLd safety IO module, for example. The initial safety signal is a safety signal that complies with the PLd level.

In this technical scenario, the mobile device takes a certain execution time from responding to the control instruction to reaching a target state corresponding to the control instruction. Illustratively, taking controlling the mobile device to stop safely as an example, the mobile device takes a certain execution time from responding to a protection stop signal to decelerating to 0. In some embodiments, the preset delay time may be manually set by the dip switch according to a motion performance of the mobile device. The preset delay time is 9s, for example.

In this embodiment, a low level signal triggers protection stop control, and the delay component 11 may be configured to directly output a high level signal in the DO signal to trigger the mobile device to execute the shutdown operation. After receiving a low level signal in the DO signal, the delay component 11 does not output the low level signal, but continues to output the high level signal to reach the preset delay time (for example, 9s). In the embodiment of the present invention, this process is referred to as delay of the low level signal. After the delay reaches 9s, the delay component 11 may output the low level signal.

It may be seen that, by using the execution mechanism 212 formed by a circuit component meeting the target safety performance level in the embodiment of the present invention, instead of a safety control component composed of a safety controller and other devices in the related art, it is possible to provide control of the matching performance level (i.e., the target performance level) for the mobile device and may reduce costs.

In an optional embodiment of the present invention, the initial safety signal includes a first level signal. The first level signal is configured to trigger a safety stop of the mobile device. The execution mechanism 212 further includes a mode selection component. The delay component is further configured to send the first level signal to the mode selection component in the case that the preset delay time is reached. The mode selection component is configured to send the power-off instruction to the safety driver if the delay component outputs the first level signal, in a case that an automatic mode is selected according to an input mode selection signal.

The first level signal of the initial safety signal is configured to maintain a normal operation of the mobile device. The first level signal is configured to trigger the safety stop of the mobile device.

In the case that the automatic mode is selected according to the input mode selection signal, the mode selection component 12 is configured to perform a logical AND operation on a signal output by the delay component, the emergency stop switch signal of the mobile device and an enable switch signal. In a case that the first level signal output by the delay component or the emergency stop switch signal is the first level signal, a safety stop signal is output to the motion control component of the mobile device, so as to trigger the motion control component to control the mobile device to stop safety.

In some embodiments, the initial safety signal includes the first level signal. The first level signal may be configured to trigger the safety stop of the mobile device.

The delay component 11 may be configured to transmit the first level signal to the mode selection component 12 directly. The delay component 11 may further be configured to delay the first level signal according to the preset delay time, and output a delayed first level signal to the mode selection component 12.

In the case that the automatic mode is selected according to the input mode selection signal, the mode selection component 12 is configured to perform the logical AND operation on the signal output by the delay component 11, the emergency stop switch signal of the mobile device and the enable switch signal. In a case that the first level signal output by the delay component 11 or the emergency stop switch signal is the first level signal, the safety stop signal is output to the motion control component of the mobile device, so as to trigger the motion control component to control the mobile device to stop safety.

In addition, in a case that a manual mode is selected according to the input mode selection signal, a signal from the delay component 11 to the mode selection component 12 is bypassed, and only when the emergency stop switch signal is the first level signal, the safety stop signal is output to the motion control component of the mobile device, so as to trigger the motion control component to control the mobile device to stop safety.

In an optional embodiment of the present invention, the initial safety signal further includes a second level signal. The second level signal is configured to maintain a normal operation of the mobile device. The delay component is further configured to send the second level signal to the mode selection component directly.

In some embodiments, the initial safety signal includes the second level signal. The second level signal may be configured to trigger the control of the behavior of the mobile device. In an actual implementation scenario, the first signal of the initial safety signal may be the second level signal.

It is to be noted that, during delay of the first level signal, the delay component 11 may continue to output the second level signal to the mode selection component 12, so that the motion control component may continue to control the mobile device within the preset delay time.

In an optional embodiment of the present invention, the execution mechanism further includes a manual operator signal interface configured to receive a mode selection signal. The mode selection component is further configured to switch a control mode of the execution mechanism to a manual mode in response to the mode selection signal, or in the manual mode, switch the control mode of the execution mechanism to the automatic mode in response to an enable switch signal.

In an optional embodiment of the present invention, the delay component includes a first delay circuit and a second delay circuit. The signal converter is further configured to output the initial safety signal to the first delay circuit and the second delay circuit, respectively.

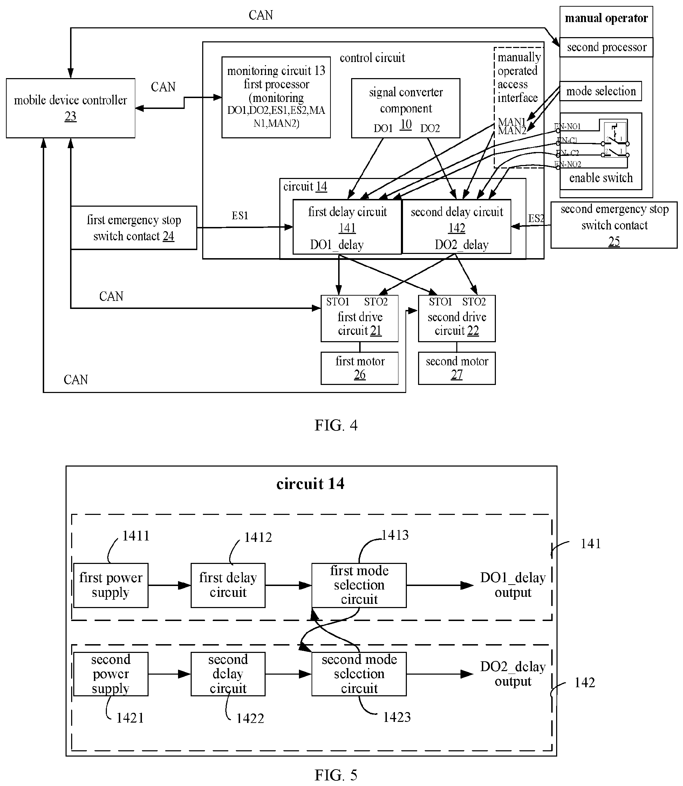

Referring to FIG. 4, the delay component 11 and the mode selection component 12 illustrated in FIG. 3 together form a circuit 14, which may include a first delay circuit 141 and a second delay circuit 142. In this embodiment, the signal converter 10 may be configured to output the initial safety signal to the first delay circuit 141 and the second delay circuit 142, respectively.

The initial safety signal output by the signal converter 10 to the first delay circuit 141 is a first initial safety signal (for example, DO1 shown in FIG. 4). The initial safety signal output by the signal converter 10 to the second delay circuit 142 is a second initial safety signal (for example, DO2 shown in FIG. 4).

It is to be understood that the first initial safety signal and the second initial safety signal are signals with a same content transmitted via different transmission channels. During transmission of the first initial safety signal and the second initial safety signal, in a case that all relevant components are operating normally, the first initial safety signal and the second initial safety signal is to be the same. In this way, in an embodiment of the present invention, by transmitting signals via two transmission channels, it is possible to verify whether there are safety hazards during the transmission of the signals by cross-verifying whether the signals of the two channels are the same.

Further, the motion control component of the mobile device may include a first drive circuit 21 and a second drive circuit 22. The first delay circuit 141 may be configured to output a second level signal of the first initial safety signal to STO1 (safety torque off) of the first drive circuit 21 and STO1 of the second drive circuit 22, respectively, and to output a first level signal of the first initial safety signal, after being delayed according to the preset delay time, to STO1 of the first drive circuit 21 and STO1 of the second drive circuit 22, respectively. The second delay circuit 142 may be configured to output a second level signal of the second initial safety signal to STO2 of the first drive circuit 21 and STO2 of the second drive circuit 22, respectively, and to output a first level signal of the second initial safety signal, after being delayed according to the preset delay time, to STO2 of the first drive circuit 21 and STO2 of the second drive circuit 22, respectively.

For the sake of distinction, the signal output by the first delay circuit 141 is represented by DO1_delay, and the signal output by the second delay circuit 142 is represented by DO1_delay.

In this way, if any one of the first delay circuit 141 and the second delay circuit 142 fails, the execution mechanism of the embodiments of the present invention may still perform a safety protection control on the mobile device via the other delay component, which is conducive to further improving safety.

Referring to FIG. 4 again, in some implementations, the motion control component of the mobile device may further include a mobile device controller 23, a first motor 26 and a second motor 27. The mobile device controller 23 is configured to receive the monitoring result of the monitoring circuit 13 (the monitoring circuit 13 is taken as a first processor in this embodiment), and send a signal to the first drive circuit 21 and the second drive circuit 22. Illustratively, both the first drive circuit 21 and the second drive circuit 22 may be configured to respond to the second level signal, and trigger the mobile device controller to control the mobile device to stop safety. The first drive circuit 21 is further configured to respond to a delayed first level signal, trigger a safety torque of the first motor 26 to turn off, and trigger mechanical braking of the first motor 26. The second drive circuit 22 is further configured to respond to a delayed first level signal, trigger the second motor 27 to brake, and trigger mechanical braking of the first motor 27. This process is a process of controlling the mobile device to stop safely.

Illustratively, the mobile device controller 23 may communicate with other circuits via a controller area network (CAN) bus. For example, the mobile device controller 23 is configured to communicate with the first drive circuit 21 and the second drive circuit 22 via the CAN and control the first drive circuit 21 and the second drive circuit 22.

The first delay circuit 141 may be connected to a first emergency stop switch contact 24 in the mobile device, and is configured to perform a logical AND operation on a first delayed level signal of the first delay circuit 141 with a first emergency stop control signal ES1 triggered by the first emergency stop switch contact 24. The second delay circuit 142 is connected to a second emergency stop switch contact 25 of the mobile device, and is configured to perform a logical AND operation on a first delayed level signal of the second delay circuit 142 with a second emergency stop control signal ES2 triggered by the second emergency stop switch contact 25.

Since both the emergency stop control signal and the safety stop signal are used to trigger the mobile device to stop, it is beneficial to simplify a circuit structure.

As shown in FIG. 4, the first delay circuit 141 and the second delay circuit 142 may be further configured to receive a control from the second processor. The second processor accesses an interface through a manual operation and generates a mode selection signal and an enable switch signal on a manual operator. The first mode selection signal MAN1 is output to the first delay circuit 141, and the second mode selection signal MAN2 is output to the second delay circuit 142. When the mode selection signal is the second level signal (i.e. a high level), it is switched to the manual mode. In the manual mode, when the mode selection signal is the first level signal (i.e. a low level), it is switched to the automatic mode. In the automatic mode, the control delay component 11 transmits the protection stop signal normally. In the manual mode, the control delay component 11 is bypassed, and only the emergency stop switch signal and the enable switch signal play a control role. When emergency stop switch signals ES1 and ES2 are both the second level signal (i.e. the high level), EN-NO1 and EN-C1 contacts of the enable switch are turned on, and EN-NO2 and EN-C2 contacts are turned on, and DO1_delay and DO2_delay output the second level signal (i.e. the high level), the mobile device controller 23 may control the first drive circuit 21 and the second drive circuit 22 and trigger the first motor 26 and the second motor 27 to operate accordingly.

It may be seen that the monitoring result output by the monitoring circuit to the mobile device controller may be implemented as at least one of: DO1, DO2, ES1, ES2, MAN1 and MAN2, and a content of the monitoring result may be implemented as different signals according to different scenarios.

In this way, the execution mechanism 212 may support switching between the two modes by providing an access interface for a manual operator, thus providing an operating space for personnel to intervene in maintenance.

In an optional embodiment of the present invention, the mode selection component includes a first mode selection component and a second mode selection component.

In a case that the first mode selection component selects the automatic mode, an output of the first delay circuit is connected in series with an input of a first emergency stop switch of the mobile device and an output of the second delay circuit, to perform a logical AND operation on a delayed signal of the first delay circuit with a signal of the first emergency stop switch and a delayed signal of the second delay circuit, and a power-off instruction after the logical AND operation is output to the safety driver. In a case that the first mode selection component selects the manual mode, an output of the first delay circuit is bypassed, and a second level signal is output to the safety driver continuously. The second level signal is configured to maintain a normal operation of the mobile device.

In a case that the second mode selection component selects the automatic mode, an output of the second delay circuit is connected in series with an input of a second emergency stop switch of the mobile device and an output of the first delay circuit, to perform a logical AND operation on a delayed signal of the second delay circuit with a signal of the second emergency stop switch and a delayed signal of the first delay circuit, and a power-off instruction after the logical AND operation is output to the safety driver. In a case that the second mode selection component selects the manual mode, an output of the second delay circuit is bypassed, and a second level signal is output to the safety driver continuously.

FIG. 5 is a schematic diagram showing the circuit 14 in FIG. 4, including a first power supply (power1) 1411 and a second power supply (power2) 1421. The first power supply 1411 is configured to supply power to the first delay circuit 1412, and the second power supply 1421 is configured to supply power to the second delay circuit 1422.

In this technical solution, the first power supply 1411 and the second power supply 1421 are provided to supply power to the two delay circuits, respectively. In a case of a failure of either power supply, the other power supply may still supply power to the corresponding delay circuit to maintain processing and transmission of the safety stop signal, thus maintaining safety control of the robot, which is conducive to reaching the PLd level.

A delay protection stop signal output by the first delay circuit 1412 is sent to a first mode selection component 1413, and the first mode selection component outputs DO1_delay. A delay protection stop signal output by the second delay circuit 1422 is sent to a second mode selection component 1423, and the second mode selection component outputs DO2_delay. In this embodiment, the first mode selection component 1413 and the second mode selection component 1423 perform logical AND operations on received signals, respectively. For details, reference may be made to the descriptions of other embodiments in this specification, which will not be elaborated herein.

The execution mechanism 212 of embodiments of the present invention is introduced below with reference to embodiments.

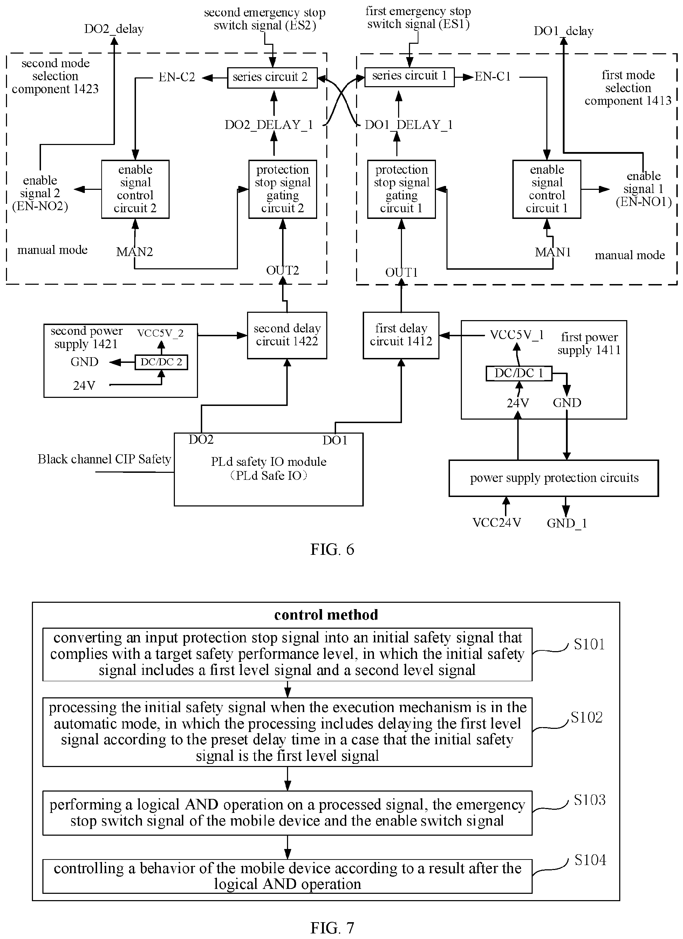

FIG. 6 is a schematic diagram showing the execution mechanism 212. The execution mechanism 212 includes, for example, the PLd safe IO module, the first power supply 1411, the second power supply 1421, the first delay circuit 1412, the second delay circuit 1422, the first mode selection component 1413 and the second mode selection component 1423. The first mode selection component 1413 may include a protection stop signal gating circuit 1, a series circuit 1, and an enable signal execution mechanism 2121. The second mode selection component 1423 may include a protection stop signal gating circuit 2, a series circuit 2, and an enable signal execution mechanism 2122.

It is to be understood that FIG. 6 is a schematic description of the execution mechanism 212, and does not constitute a limitation on the execution mechanism 212 of the embodiments of the present invention. In other embodiments, the execution mechanism 212 of the embodiments of the present invention may also include more or fewer circuit modules. In other embodiments, some circuit modules in the execution mechanism 212 may be split into two circuit modules, or some circuit modules in the execution mechanism 212 may be combined into one circuit module for implementation, which is not limited herein.

Referring to FIG. 6 again, the first power supply 1411 is configured to supply power to the first delay circuit 1412, and the second power supply 1421 is configured to supply power to the second delay circuit 1422. The first power supply 1411 and the second power supply 1421 are both 5 volt (V) power supplies, for example. The first power supply 1411 transforms a 24V power supply into a 5V power supply via a DC transformer (DC/DC 1) to supply power to the first delay circuit 1412. The second power supply 1421 transforms a 24V power supply into a 5V power supply via a DC transformer (DC/DC 2) to supply power to the second delay circuit 1422.

It is to be noted that power supply protection circuits (which are not shown in the second power supply in FIG. 6) may be provided in circuits of the first power supply 1411 and the second power supply 1421 to protect corresponding power supply circuits.

After receiving a signal from a remote control platform via a network black channel based on the Common Industrial Protocol (CIP Safety Black channel), the PLd safety I/O module converts the signal into a DO signal complying with the PLd level, and outputs a DO1 signal to the first delay circuit 1412 and outputs a DO2 signal to the second delay circuit 1422. The DO1 signal and the DO2 signal have a same level. Illustratively, a first signal of the DO1 signal and the DO2 signal may be a high level signal.

After receiving the DO1 signal, the first delay circuit 1412 may directly output the high level signal of the DO1 signal to the series circuit 1 via the protection stop signal gating circuit 1. A low level signal of the DO1 signal is delayed (i.e., not output) until a delayed time reaches the preset time before being output to the protection stop signal gating circuit 1. In this embodiment, a signal output by the first delay circuit 1412 is referred to as OUT1, and a signal output by the protection stop signal gating circuit 1 is referred to as DO1 delay signal 1 (DO1_DELAY_1). Similarly, after receiving the DO2 signal, the second delay circuit 1422 may directly output the high level signal of the DO2 signal to the series circuit 2 via the protection stop signal gating circuit 2. A low level signal of the DO2 signal is delayed (i.e., not output) until a delayed time reaches the preset time before being output to the protection stop signal gating circuit 2. In this embodiment, a signal output by the second delay circuit 1422 is referred to as OUT2, and a signal output by the protection stop signal gating circuit 2 is referred to as DO2 delay signal 1 (DO2_DELAY_1).

In the series circuit 1, DO1_DELAY_1, DO2_DELAY_1 and the first emergency stop switch signal ES1 may be connected in series through a logical AND operation. In this way, when any of the three signals is at a low level, EN-C1 output by the series circuit 1 is at a low level. DO1_delay (EN-NO1) is at a low level, both the first drive circuit and the second drive circuit stop safely.

Accordingly, in the series circuit 2, DO2_DELAY_1, DO1_DELAY_1 and the second emergency stop switch signal ES2 may be connected in series through a logical AND operation. In this way, when any of the three signals is at a low level, EN-C2 output by the series circuit is also at a low level. DO2_delay (EN-NO2) is at a low level, and both the first drive circuit and the second drive circuit stop safely.

It is to be noted that the protection stop signal gating circuit 1 is controlled by the first mode selection signal MAN1, and the protection stop signal gating circuit 2 is controlled by the second mode selection signal MAN2.

When a manual operator is connected to the robot, the execution mechanism 212 is in the manual mode, and MAN1 and MAN2 may be in the high level. In addition, in the manual mode, the OUT1 signal is bypassed, and DO1_DELAY_1 output by the protection stop signal gating circuit 1 is always at the high level. The OUT2 signal is bypassed, and DO2_DELAY_1 output by the protection stop signal gating circuit 2 is always at the high level. At the same time, the enable signal execution mechanism 2121 disconnects an original connection between EN-C1 and DO1_delay (EN-NO1), and the EN-C1 and DO1_delay (EN-NO1) are controlled by an enable switch of the manual operator. When the enable switch is pressed, EN-C1 and DO1_delay (EN-NO1) are connected. When the enable switch pops up and disconnects, EN-C1 and DO1_delay (EN-NO1) are disconnected, and at the same time, and the enable signal execution mechanism 2122 disconnects an original connection between EN-C2 and DO2_delay (EN-NO2). Similarly, EN-C2 and DO2_delay (EN-NO2) are controlled by an enable switch of the manual operator. When the enable switch is pressed, EN-C1 and DO1_delay (EN-NO1) are connected, and when the enable switch pops up and disconnects, EN-C1 and DO1_delay (EN-NO1) are disconnected.

When the manual operator is disconnected from the robot, and MAN1 and MAN2 are at the low level, the execution mechanism 212 is switched to an automatic (auto) mode. In the automatic mode, the robot is controlled by a remote scheduling system. At this time, the output DO1_DELAY_1 of the protection stop signal gating circuit 1 is connected to the OUT1 signal directly, and the output DO2_DELAY_1 of the protection stop signal gating circuit 2 is connected to the OUT2 signal directly. EN-C1 of the enable signal execution mechanism 2121 is connected to DO1_delay (EN-NO1) directly, and EN-C2 of the enable signal execution mechanism 2122 is connected to DO2_delay (EN-NO2) directly.

For the triggering of the robot by various signals in FIG. 6 and a response process of the robot, reference may be made to the descriptions of other embodiments in this specification, which will not be elaborated herein.

In an optional embodiment of the present invention, the first level signal is a low level signal, and the second level signal is a high level signal.

In some embodiments, the initial safety signal includes the first level signal and the second level signal. The first level signal may be configured to trigger a safe stop of the mobile device. The second level signal may be configured to trigger the control of the behavior of the mobile device. In an actual implementation scenario, the first signal of the initial safety signal may be the second level signal.

Illustratively, the initial safety signal may be, for example, a digital output (DO) signal, the first level signal may be, for example, a low level signal of the DO signal, and the second level signal may be, for example, a high level signal of the DO signal.

It is to be noted that, during delay of the second level signal, the delay component may continue to output the first level signal to the mode selection component 12, to make the motion control component continue to control the mobile device within the preset delay time.

In addition, in the case that the manual mode is selected according to the input mode selection signal, the signal from the delay component to the mode selection component 12 is bypassed, and only when the emergency stop switch signal is the second level signal, the safety stop signal is output to the motion control component of the mobile device, so as to trigger the motion control component to control the mobile device to stop safely.

The delay component may be configured to transmit the second level signal to the mode selection component directly. The delay component may be further configured to delay the first level signal according to the preset delay time, and output the delayed first level signal to the mode selection component.

Corresponding to the execution mechanism 212 of the embodiments of the present invention, an embodiment of the present invention further provides a control method.

A control method provided in an embodiment of the present invention is shown in FIG. 7. The control method is applied to an execution mechanism 212, the execution mechanism 212 may be shown in any of the embodiments in FIGS. 2 to 6, for example. The control method includes steps as follows.

In step S101, an input protection stop signal is converted into an initial safety signal that complies with a target safety performance level. The initial safety signal includes a first level signal and a second level signal.

The target safety performance level is a safety performance level of a controlled mobile device, and the target safety performance level is, for example, the PLd level. If the initial safety signal complies with the target safety performance level, in this embodiment, the initial safety signal is a signal of the PLd level, for example.

Illustratively, the initial safety signal may be the DO signal, the first level signal may be a low level signal, and the second level signal may be a high level signal. In an actual implementation scenario, a first signal of the initial safety signal may be a high level signal.

It is to be noted that the execution mechanism 212 may be deployed at the mobile device, and a signal received by the execution mechanism 212 may come from the control platform that controls the mobile device. In an embodiment, the mobile device may operate in a predefined operation area, and the control platform is provided in the operation area correspondingly to control the mobile device operating in the operation area. Illustratively, the control platform may generate a source signal in response to a user trigger, and send the source signal to a slave control module of the mobile device via a wireless network. The slave control module of the mobile device sends the source signal to the signal converter of the execution mechanism 212. The slave control module may send the source signal to the signal converter via an Ethernet industrial protocol (EIP) module.

Since the control platform does not belong to a category of machinery used for production, the risk assessment is not needed, and a source signal generated by the control platform does not comply with any safety performance level. Based on this, the source signal (i.e., the signal received by the execution mechanism 212) is converted into a signal complying with the target safety performance level (i.e., the initial safety signal) by the signal converter before it may be used to trigger the mobile device to perform a corresponding operation.

In step S102, when the execution mechanism is in the automatic mode, the initial safety signal is processed, and the processing includes delaying the first level signal according to the preset delay time in a case that the initial safety signal is the first level signal.

In addition, in response to a received instruction to switch to the manual mode, the second level signal is continuing to output. In response to a received enable signal, the manual mode may be switched to the automatic mode to output the first level signal.

In step S103, a logical AND operation is performed on a processed signal, the emergency stop switch signal of the mobile device and the enable switch signal.

In step S104, a behavior of the mobile device is controlled according to a result after the logical AND operation.

Illustratively, controlling the behavior of the mobile device according to the result after the logical AND operation includes as follows: if a signal after the logical AND operation is the delayed first level signal, the motor of the mobile device is driven to brake in response to the delayed first level signal; and if a signal after the logical AND operation is the second level signal, the mobile device is controlled to stop safely.

It is to be noted that within the preset delay time, even if the initial safety signal is the first level signal, the execution mechanism 212 may still continue to respond to the first level signal in parallel to control the behavior of the mobile device, to make the mobile device reach a stopped state. Furthermore, the motor of the mobile device is driven to brake in response to the first level signal, to make the mobile device power off, enabling the mobile device to maintain a stable stopped state.

After the initial safety signal is obtained in step S101, the initial safety signal is transmitted to the first delay circuit and the second delay circuit via two channels. Accordingly, steps S102 to S104 are processing processes of two signals with a same content, which will not be elaborated herein. For circuit components and signal flow directions involved in steps S101 to S104, reference may be made to the related descriptions in FIGS. 2 to 6, which will not be elaborated herein.

To sum up, the execution mechanism provided in the embodiment of the present invention includes the signal converter, the delay component, the mode selection component, and the monitoring circuit. The signal converter is configured to convert the input protection stop signal into the initial safety signal complying with the safety performance level. The second level signal of the initial safety signal is configured to maintain the normal operation of the mobile device, and the first level signal is configured to trigger the safety stop of the mobile device, so as to provide the safety signal of a same level as the performance level of the mobile device. The initial safety signal is output to the delay component. The delay component is configured to transmit the second level signal to the mode selection component directly and transmit the first level signal delayed by the preset delay time to the mode selection component. In the case that the automatic mode is selected according to the input mode selection signal, the mode selection component is configured to perform the logical AND operation on the signal output by the delay component, the emergency stop switch signal of the mobile device and the enable switch signal. In the case that the first level signal output by the delay component or the emergency stop switch signal is the first level signal, the safety stop signal is output to the motion control component of the mobile device, so as to trigger the motion control component to control the mobile device to stop safety. The monitoring circuit is configured to monitor the initial protection stop signal, the mode selection signal and the emergency stop switch signal, and, in the case that the initial protection stop signal is the first level signal, transmit the monitoring result to the mobile device controller, to make the mobile device controller trigger the motion control component to control the mobile device to stop safety. It may be seen that in this technical solution, by using the circuit complying with the target safety performance level, instead of the safety control component composed of the safety controller and other devices in the related art, it is conducive to reducing costs and providing the control of the matching performance level (i.e., the target performance level) for the mobile device.

In an optional embodiment of the present invention, the movement controller is further configured to send a power-on instruction to the safety driver, in a case that a reset instruction forwarded by the second safety control mechanism is received. The safety driver is further configured to drive the motor to reset according to the power-on instruction.

In the case that the reset instruction forwarded by the second safety control mechanism is received, the movement controller is configured to send the power-on instruction to the safety driver, to allow the motor to reset. That is, a state of stopping and braking is released, so that when the scheduling instruction is received later, corresponding scheduling processing may be performed directly based on the scheduling instruction. In a case that the power-on instruction sent by the movement controller is received, the safety driver is configured to drive the motor to execute a power-on operation. That is, a state of stopping and braking is released and a standby state is entered.

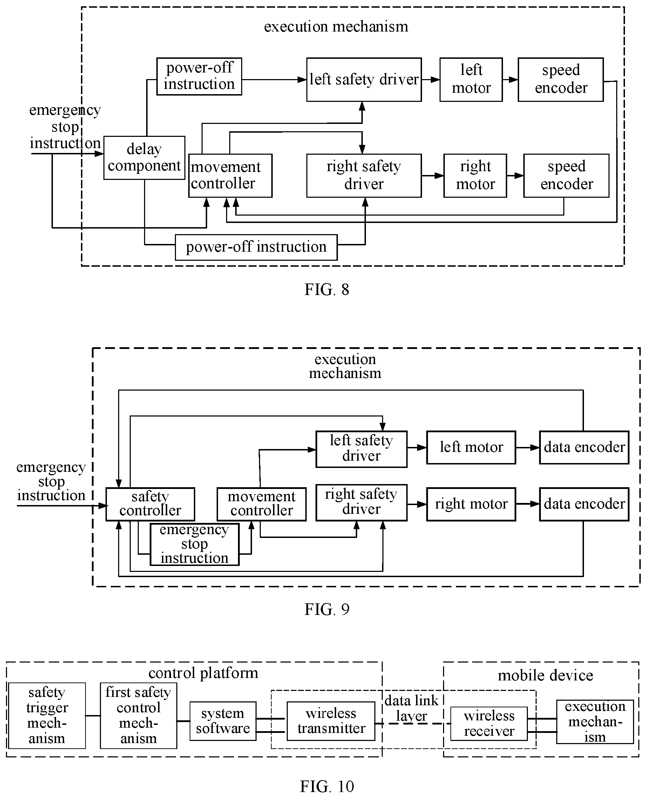

Referring to FIG. 8, FIG. 8 is a flow chart showing interactions of an execution mechanism under a motion control system architecture provided in an embodiment of the present invention.

The execution mechanism includes the delay component, the movement controller, the safety driver, the motor and the speed encoder. When the execution mechanism receives the emergency stop instruction, a data flow is as follows.

Phase 1: the movement controller is configured to receive the emergency stop instruction transmitted by the second safety control mechanism, obtain the current moving speed of the mobile device, predict the motor deceleration information according to the current moving speed, and send the motor deceleration information to the safety driver.

Phase 2: a left safety driver and a right safety driver are configured to drive a left motor and a right motor to decelerate according to the motor deceleration information, respectively.

Phase 3: the delay component is configured to receive the emergency stop instruction transmitted by the second safety control mechanism simultaneously, and send the power-off instruction to the safety driver in the case that the preset delay time is reached.

Phase 4: the left safety driver and the right safety driver are configured to drive the left motor and the right motor to power off and brake, respectively, according to the power-off instruction.

Phase 5: the speed encoder is configured to obtain a current rotation speed of the left motor and the right motor, and feed back the current rotation speed to the movement controller, and the movement controller is configured to generate the alarm information in the case that the current rotation speed does not match the preset rotation speed.

According to a solution of an embodiment of the present invention, when the reset instruction is received, the movement controller is configured to send the power-on instruction to the safety driver, to make the safety driver drive the motor to reset and resume a standby state, so that the mobile device may be scheduled directly when subsequent scheduling is performed, and the efficiency of a subsequent operation of the mobile device is improved.

In an optional embodiment of the present invention, the execution mechanism includes a safety controller, a movement controller, a safety driver, a motor and a data encoder. The safety controller is configured to receive the parsing result of the emergency stop instruction, and forward the parsing result to the movement controller. The movement controller is configured to obtain a current moving speed of the mobile device in response to the parsing result, predict motor deceleration information according to the current moving speed, and send the motor deceleration information to the safety driver. The safety driver is configured to drive the motor to decelerate according to the motor deceleration information. The data encoder is configured to obtain a current rotation speed of the motor and feed back the current rotation speed to the safety controller. The safety controller is further configured to monitor the motor deceleration information, identify whether a deceleration abnormality occurs in the motor according to the current rotation speed, and if the deceleration abnormality occurs in the motor, send a power-off instruction to the safety driver. The safety driver is further configured to drive the motor to power off and brake according to the power-off instruction.

Specifically, the safety controller is a device that monitors and controls safe deceleration of the mobile device. For example, when the motor is not decelerated at a predetermined speed, the safety controller determines that an abnormality occurs in the motor.

When the parsing result of the emergency stop instruction is received, the safety controller is configured to send the parsing result to the movement controller, to make the movement controller, according to the parsing result, control the mobile device execute a corresponding operation. The movement controller is configured to obtain the current speed of the mobile device according to the parsing result, predict the motor deceleration information, and send the motor deceleration information to the safety driver, to make the safety driver drive the motor to decelerate according to predicted motor deceleration information. The data encoder is configured to obtain a real-time current rotation speed of the motor simultaneously, and feed back an obtained current rotation speed to the movement controller. The movement controller is configured to monitor the motor deceleration information, match the current rotation speed of the motor with a rotation speed in the predicted motor deceleration information, and determine whether the deceleration abnormality occurs, and if the deceleration abnormality occurs in the motor, send the power-off instruction to the safety driver. The safety driver is configured to drive the motor to power off and brake.

In addition, if the movement controller determines that the current rotation speed of the motor is matched with the rotation speed in the predicted motor deceleration information, that is, no abnormal deceleration occurs in the motor, the safety driver only needs to drive the motor to decelerate, without the need to drive the motor to power off and brake.

According to a solution of an embodiment of the present invention, the execution mechanism includes the safety controller, the movement controller, the safety driver, the motor and the data encoder. The movement controller receives the emergency stop instruction and predicts the motor deceleration information. The safety driver drives the motor to decelerate according to the motor deceleration information. At the same time, the data encoder obtains the current rotation speed of the motor in real time and forwards the current rotation speed to the safety controller. The safety controller monitors the rotation speed of the motor, and determines whether the abnormality occurs. When it is determined that the abnormality occurs, the safety driver drives the motor to power off the power and brake. To a certain extent, the safety of the motor is guaranteed, and errors caused by abnormal deceleration of the motor are avoided.

In an optional embodiment of the present invention, the safety controller is further configured to forward a reset instruction to the movement controller in a case that the reset instruction forwarded by the second safety control mechanism is received. The movement controller is further configured to send a power-on instruction to the safety driver in response to the reset instruction. The safety driver is further configured to drive the motor to reset according to the power-on instruction.

In the case that the reset instruction sent by the second safety control mechanism is received, the safety controller is configured to send the reset instruction to the movement controller. The movement controller is configured to process the reset instruction accordingly, that is, the movement controller is configured to send the power-on instruction to the safety driver based on the reset instruction, to make the safety driver drive the motor to execute a power-on operation, that is, a state of stopping and braking is released, so that the motor may be scheduled directly based on the scheduling instruction when receiving the scheduling instruction.

Referring to FIG. 9, FIG. 9 is a flow chart showing interactions of an execution mechanism under another motion control system architecture provided in an embodiment of the present invention.

The execution mechanism includes the safety controller, the movement controller, the safety driver, the motor and the data encoder. When the execution mechanism receives the emergency stop instruction, a data flow is as follows.

Phases 1: the safety controller is configured to receive the parsing result of the emergency stop instruction and forward the parsing result to the movement controller. The movement controller is configured to receive the emergency stop instruction, obtain a current moving speed of the mobile device, predict motor deceleration information according to the current moving speed, and send the motor deceleration information to a left safety driver and a right safety driver.

Phases 2: the left safety driver and the right safety driver are configured to drive a left motor and a right motor to decelerate according to the motor deceleration information. The data encoder is configured to obtain the current rotation speed of the motor and feed back the current rotation speed to the safety controller.

Phases 3: the safety controller is configured to monitor the motor deceleration information, identify whether the left motor and the right motor decelerate abnormally according to the current rotation speed, and if the left motor and the right motor decelerate abnormally, send a power-off instruction to the left safety driver and the right safety driver. The left safety driver and the right safety driver are configured to drive the left motor and the right motor to power off and brake according to the power-off instruction.

According to a solution of an embodiment of the present invention, when the reset instruction is received, the safety controller is configured to forward the reset instruction to the movement controller. The movement controller is configured to send the power-on instruction to the safety driver, to make the safety driver drive the motor to execute a power-on operation, so that further instructions may be received directly, and actions may be taken directly based on the instruction.

In an optional embodiment of the present invention, the control platform is further configured to generate a scheduling instruction and transmit the scheduling instruction to the mobile device via a second communication link. The scheduling instruction complies with a preset data link communication protocol, and the second communication link is a communication link with the preset data link communication protocol among the at least two communication links. The mobile device is further configured to receive the scheduling instruction via the second communication link, parse the scheduling instruction, and execute a scheduling operation according to a parsing result.

Specifically, the scheduling instruction is an instruction generated by human operation or system software to schedule the mobile device, and the scheduling instruction complies with the preset data link communication protocol. For example, the scheduling instruction may be a button to cause the mobile device to carry goods to be pressed, and an instruction to cause the mobile device to place goods on a shelf to be input, etc. After the scheduling instruction is generated, the control platform is configured to transmit the scheduling instruction to the mobile device via the second communication link, and the mobile device executes the corresponding scheduling operation. In addition, when the scheduling instruction complying with the preset data link communication protocol is transmitted via the second communication link, the scheduling instruction may be protected by the preset data link communication protocol, which greatly reduces the impact on the transmission of the emergency stop instruction.

According to a solution of an embodiment of the present invention, the control platform is further configured to generate the scheduling instruction complying with the preset data link communication protocol and transmit the scheduling instruction to the mobile device via the second communication link. The mobile device is configured to receive the scheduling instruction via the second communication link, parse an obtained parsing result, and execute the scheduling operation according to the parsing result. The scheduling instruction is transmitted via the second communication link different from the first communication link, thus ensuring the safety of the transmission of the scheduling instruction, and greatly reducing the influence on the transmission of the emergency stop instruction.

In an optional embodiment of the present invention, the control platform is further configured to generate a reset instruction in a case that it is detected that a reset event has been triggered, and transmit the reset instruction to the mobile device via the first communication link. The mobile device is further configured to receive the reset instruction via the first communication link, parse the reset instruction, and resume operation according to the parsing result.

Specifically, the reset event is an event that causes the mobile device to reset due to human or system software reasons. For example, the reset event may be triggered by an emergency stop button in the mobile device area being released, the grating changing from blocked to normal, and a start action being artificially performed after the safety door is closed, etc. When it is detected that the reset event has been triggered, the control platform generates the reset instruction and transmit the reset instruction to the mobile device, and the mobile device, based on the reset instruction, performs corresponding reset processing, namely resume operation. That is, by detecting whether the reset event has been triggered, in the case that the reset event has been triggered, corresponding processing may be performed quickly to prevent a processing flow corresponding to the reset event from not being generated. The reset instruction is an instruction that contains information that causes the mobile device to reset. Through the reset instruction, the mobile device may resume operation when it is in a shutdown state.

When it is detected that the reset event has been triggered, the control platform is configured to generate the reset instruction, and transmit the reset instruction to the mobile device via the first communication link. The mobile device is configured to receive the reset instruction via the first communication link, parse the reset instruction, and resume operation according to the parsing result.

Based on FIG. 2, the network communication stack is configured to receive the control instruction, and filter and identify the received control instruction. When it identifies that the control instruction is a non-safety instruction received from the first communication link, the non-safety instruction is parsed by using the preset data link communication protocol to obtain the reset instruction, and then the reset instruction in an Ethernet/IP protocol and CAN bus protocol format is output to the execution structure. Of course, in another implementation, the reset instruction may also be a safety instruction, and the network communication stack forwards the safety instruction to the safety protocol stack. The safety protocol stack parses the safety instruction complying with the preset safety communication protocol by using the preset safety communication protocol, obtains the parsing result being the reset instruction, and then outputs the parsing result in a form of input/output quantities safely via the second safety input/output interface.

According to a solution of an embodiment of the present invention, when it is detected that the reset event has been triggered, the control platform is configured to generate the reset instruction, and transmit the reset instruction to the mobile device via the first communication link. The mobile device is configured to receive the reset instruction via the first communication link, parse the reset instruction, obtain the parsing result according to which the mobile device may perform corresponding processing, and resume operation according to the parsing result. The reset instruction is transmitted via the first communication link, thus ensuring a transmission channel of the reset instruction and further ensuring that the reset instruction is transmitted safely, so as to facilitate post-reset processing of the mobile device.

In an optional embodiment of the present invention, the mobile device is further configured to feed back confirmation information to the control platform after receiving the emergency stop instruction. The control platform is further configured to send a prompt message to the mobile device, in a case that the confirmation information fed back by the mobile device is not received within a preset safety period after the emergency stop instruction is transmitted to the mobile device. The mobile device is further configured to execute a shutdown operation in response to the prompt message.

Specifically, the preset safety period is a preset period for feedback of the safety instruction. That is, after sending the emergency stop instruction to the mobile device, the control platform waits for a time corresponding to the preset safety period, and needs to receive the confirmation information from the mobile device within the preset period. The confirmation information is information corresponding to the emergency stop instruction, and is used to inform the control platform that the mobile device has received the emergency stop instruction. The control platform first sends the emergency stop instruction to the mobile device, and the mobile device needs to feedback the confirmation information to the control platform based on the emergency stop instruction, so that the control platform confirms that the mobile device has received the emergency stop instruction. The prompt message is a message corresponding to the emergency stop instruction and confirmation information, and the prompt message is sent to the mobile device again when the control platform does not receive feedback from the mobile device, so that the mobile device may execute the shutdown operation after receiving the prompt message, thus achieving a purpose of the mobile device required by the emergency stop instruction.

Optionally, a mode of prompting the mobile device to execute the shutdown operation may also be that the control platform presets a preset duration during a normal operation period of the mobile device, and every preset duration, the control platform sends a first interactive message to the mobile device, and the mobile device needs to return a second interactive message to the control platform within the preset safety period. If the control platform fails to send the first interactive message or the mobile device fails to send the second interactive message, the control platform sends the prompt message to the mobile device, so that the mobile device may execute the shutdown operation in response to the prompt message.

Optionally, there are many possibilities of not receiving the confirmation information fed back by the mobile device, which may be that the control platform fails to send the emergency stop instruction successfully, or that the control platform send the emergency stop instruction successfully, but the mobile device fails to send confirmation information when returning the confirmation information.

After sending the emergency stop instruction to the mobile device, the control platform confirms whether the confirmation information sent by the mobile device is received within the preset safety period, and if the confirmation information is received, an emergency stop process ends.

According to a solution of an embodiment of the present invention, the preset safety period is set on the control platform, and after the emergency stop instruction is sent, it is determined whether the confirmation information of the mobile device is received within the preset period, and if the confirmation information is not received, the prompt message is sent to the mobile device, to make the mobile device execute the shutdown operation, so that even if the mobile device does not execute the shutdown operation according to the emergency stop instruction, the shutdown operation may be executed according to a received prompt message, thus ensuring that the mobile device executes the shutdown operation.

The first communication link and the second communication link exist between the control platform and the mobile device. The first communication link complies with the preset safety communication protocol, and a safety task time interval is set at the control platform and the mobile device. After the control platform and the mobile device establish a connection, interactive confirmation is maintained according to the safety task time interval. That is, when the control platform sends a first response message successfully and receives a second response message returned by the mobile device, current interactive confirmation is considered to be valid. If the control platform fails to send the first response message successfully or the mobile device fails to return the second response message successfully, the mobile device is automatically controlled by an internal unit to enter the safety state, that is, the emergency stop state, and the second safety control mechanism may send the emergency stop instruction to the execution mechanism to allow the mobile device controlled to stop safely until the control platform and the mobile device reestablish a connection. After re-establishing the connection, the mobile device automatically jumps out of the safety state via the control of the internal unit and resumes a state before entering the safety state.

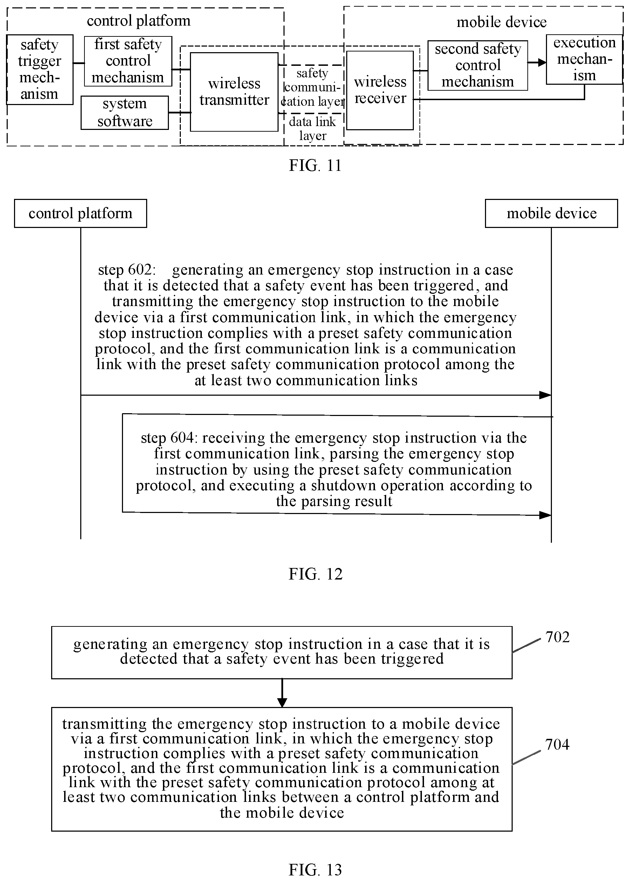

Referring to FIGS. 10 and 11, FIG. 10 is a schematic diagram showing a data flow of a motion control system provided in an embodiment of the present invention. FIG. 10 is a schematic diagram showing a data flow of another motion control system provided in an embodiment of the present invention.

The control platform in FIG. 10 includes the safety trigger mechanism, the first safety control mechanism, the system software and the wireless transmitter. The mobile device includes the wireless receiver and the execution mechanism. An interaction between the control platform and the mobile device is performed only via a data link layer, namely a physical layer.

In the first communication link in FIG. 11, the control platform includes the safety trigger mechanism, the first safety control mechanism and the wireless transmitter, and the mobile device includes the wireless receiver, the second safety control mechanism and the execution mechanism. In the second communication link, the control platform includes the system software and the wireless transmitter, and the mobile device includes the wireless receiver, the second safety control mechanism and the execution mechanism. The first communication link communicates via a safety communication layer protected by the preset safety communication protocol, and the second communication link communicates via the data link layer.

According to a solution of an embodiment of the present invention, the motion control system includes the control platform and the at least one mobile device. The control platform communicates with each mobile device via the at least two communication links. The control platform is configured to generate the emergency stop instruction in the case that it is detected that the safety event has been triggered, and transmit the emergency stop instruction to the mobile device via the first communication link. The first communication link is the communication link with the preset safety communication protocol among the at least two communication links. The mobile device is configured to receive the emergency stop instruction via the first communication link, parse the emergency stop instruction by using the preset safety communication protocol, and execute the shutdown operation according to the parsing result. By setting the at least two communication links between the control platform and the mobile device, in the case that it is detected that the safety event has been triggered, the control platform is configured to generate the emergency stop instruction complying with a preset safety communication protocol, and transmit the emergency stop instruction to the mobile device via the first communication link. After receiving the emergency stop instruction transmitted by the first communication link, the mobile device is configured to parse the emergency stop instruction, and execute the shutdown operation according to the parsing result. That is, the first communication link is set for the emergency stop instruction, and the emergency stop instruction is transmitted by using a different communication link than other communication signals. The transmission of the emergency stop instruction is protected by the preset safety communication protocol, thus reducing an occurrence probability of transmission failure or error when the emergency stop instruction is transmitted to the mobile device, and improving the safety of the transmission of the emergency stop instruction.

Referring to FIG. 12, FIG. 12 is a flow chart showing a motion control method provided in an embodiment of the present invention. The motion control method is applied to a motion control system. The motion control system includes a control platform and at least one mobile device. The control platform communicates with each mobile device via at least two communication links. The method includes steps as follows.

In step 602, the control platform generates an emergency stop instruction in a case that it is detected that a safety event has been triggered, and transmits the emergency stop instruction to the mobile device via a first communication link. The emergency stop instruction complies with a preset safety communication protocol, and the first communication link is a communication link with the preset safety communication protocol among the at least two communication links.

In step 604, the mobile device receives the emergency stop instruction via the first communication link, parses the emergency stop instruction by using the preset safety communication protocol, and executes a shutdown operation according to the parsing result.

For embodiments of steps 602 to 604, reference may be made to the system embodiments corresponding to FIG. 1, which will not be elaborated herein.

Referring to FIG. 13, FIG. 13 is a flow chart showing a motion control method applied to a control platform provided in an embodiment of the present invention. The method includes steps as follows.

In step 702, in a case that it is detected that a safety event has been triggered, an emergency stop instruction is generated.

In step 704, the emergency stop instruction is transmitted to a mobile device via a first communication link. The emergency stop instruction complies with a preset safety communication protocol, and the first communication link is a communication link with the preset safety communication protocol among at least two communication links between the control platform and the mobile device.

For embodiments of steps 702 to 704, reference may be made to the system embodiments corresponding to FIG. 1, which will not be elaborated herein.

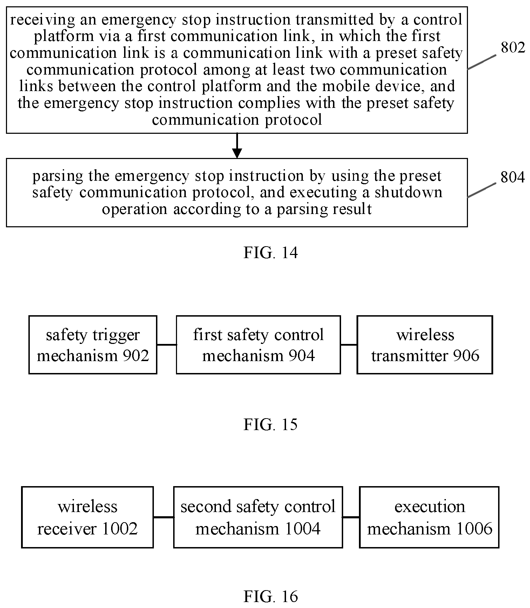

Referring to FIG. 14, FIG. 14 is a flow chart showing a motion control method applied to a mobile device provided in an embodiment of the present invention. The method includes steps as follows.

In step 802, an emergency stop instruction transmitted by a control platform is received via a first communication link. The first communication link is a communication link with a preset safety communication protocol among at least two communication links between the control platform and the mobile device, and the emergency stop instruction complies with the preset safety communication protocol.

In step 804, the emergency stop instruction is parsed by using the preset safety communication protocol, and a shutdown operation is executed according to a parsing result.

For embodiments of steps 802 to 804, reference may be made to the system embodiments corresponding to FIG. 1, which will not be elaborated herein.

According to a solution of an embodiment of the present invention, a motion control system includes a control platform and at least one mobile device. The control platform communicates with each mobile device via at least two communication links. The control platform is configured to generate an emergency stop instruction in a case that it is detected that a safety event has been triggered, and transmit the emergency stop instruction to the mobile device via a first communication link. The first communication link is a communication link with a preset safety communication protocol among the at least two communication links. The mobile device is configured to receive the emergency stop instruction via the first communication link, parse the emergency stop instruction by using the preset safety communication protocol, and execute a shutdown operation according to a parsing result. By setting the at least two communication links between the control platform and the mobile device, in the case that it is detected that the safety event has been triggered, the control platform is configured to generate the emergency stop instruction complying with the preset safety communication protocol, and transmit the emergency stop instruction to the mobile device via the first communication link with preset safety communication protocol. After receiving the emergency stop instruction transmitted by the first communication link, the mobile device is configured to parse the emergency stop instruction, and execute the shutdown operation according to the parsing result. That is, the first communication link is set for the emergency stop instruction, and the emergency stop instruction is transmitted by using a different communication link than other communication signals. The transmission of the emergency stop instruction is protected by the preset safety communication protocol, thus reducing an occurrence probability of transmission failure or error when the emergency stop instruction is transmitted to the mobile device, and improving the safety of the transmission of the emergency stop instruction.

FIG. 15 is a block diagram showing a control platform provided in an embodiment of the present invention. Components of the control platform include a safety trigger mechanism 902, a first safety control mechanism 904 and a wireless transmitter 906.

The safety trigger mechanism 902 includes an emergency stop button, a grating, a safety door, etc. Output signal forms of various safety trigger mechanisms 902 are specified in respective device design manuals. A common emergency stop button is a dual-circuit pulse, the grating is an OSSD signal, and a safety door lock is an OSSD signal. An input is triggered either manually by operators or automatically. An output is an I/O signal output including a triggered, untriggered or abnormal state that indicates a device status.

The safety trigger mechanism 902 may be installed both at a periphery of an operational zone of a mobile device and in an operator-accessible interface location, equipped with an emergency stop button, a grating and a safety door. The safety door is the only passage for people to enter and exit the operational zone of the mobile device. The operational zone of the mobile device is isolated from the outside by a fixed fence to reduce risk of impact or extrusion caused by an erroneous operation of the mobile device. After being triggered, the first safety control mechanism 904 issues an emergency stop instruction and transmit the emergency stop instruction to at least one mobile device. The safety door is equipped with a safety door lock, which is the only entrance for the operator to enter the operational zone of the mobile device. When the safety door lock is activated, the emergency stop instruction is sent by the first safety control mechanism 904 and is transmitted to the at least one mobile device. Each safety trigger mechanism 902 is equipped with a reset button, and a reset instruction may be triggered by the reset button.

The first safety control mechanism 904 includes a first safety input/output interface, a first safety processor and a safety network module. An input of the first safety control mechanism 904 is a condition of whether the safety trigger mechanism 902 has been triggered or the reset button has been pressed, i.e., the output of the safety trigger mechanism 902 or the reset button. An output of the first safety control mechanism 904 is to output whether the safety trigger mechanism 902 has been triggered or whether the reset button has been pressed in a form of a network port.

The first safety control mechanism 904 may respond to the trigger of the safety trigger mechanism 902 through programmable logic and transmit the trigger via the preset safety communication protocol (CIP safety protocol). The first safety input/output interface is configured to input a status of the safety trigger mechanism 902 to the first safety processor. The first safety processor is configured to respond to the trigger of the safety trigger mechanism 902 through programmable logic. Within a safety communication layer, an input signal is encoded into a safety format complying with CIP safety protocol. Verification actions specified in the preset safety communication protocol are executed, such as redundancy detection, data integrity verification, timeout detection, and connection authorization detection, etc. The safety network module is configured to transmit a computational result of the safety CPU in a form of a network port. A communication protocol of an output signal of the first safety control mechanism 904 is Ethernet/IP at the data link layer and CIP safety at the safety communication layer, and a high-speed analog semaphore is transmitted in a form of a network port.

The wireless transmitter 906 includes a switch, a wireless controller, and a wireless access point. An input of the wireless transmitter 906 is the output of the first safety control mechanism 904, and an output of the wireless transmitter 906 is to send a wireless signal to the mobile device. The switch is configured to forward a data packet to a destination node port (a wireless controller and a wireless access point). The wireless controller and wireless access point are configured to convert the data packet into a wireless signal and send the wireless signal to the mobile device.

Limitations on the scope of the present invention: those skilled in the art may add or replace other components as needed.

It is to be noted that the technical solution of the control platform and the technical solution of the above-mentioned motion control system belong to the same concept. For details not described in detail in the technical solution of the control platform, reference may be made to the description of the technical solution of the above-mentioned motion control system.

FIG. 16 is a block diagram showing a mobile device provided in an embodiment of the present invention. Components of the mobile device include a wireless receiver 1002, a second safety control mechanism 1004, and an execution mechanism 1006.

The wireless receiver 1002 includes a wireless receiving module, a forwarding module and a wireless receiving processor. An input of the wireless receiver 1002 is a wireless signal, and an output of the wireless receiver 1002 is an instruction in an Ethernet format.

The wireless receiver 1002 is configured to convert a received wireless signal into a data packet in an Ethernet port format. The wireless receiving module is configured to receive a WIFI signal. The wireless receiving processor is configured for transparent transmission of the data packet. The forwarding module is configured to convert a received wireless signal into an Ethernet port format. After receiving a wireless signal of 2.4GHz, the wireless receiver 1002 is configured to transmit the wireless signal to the wireless receiving processor via a PCIE bus, and the wireless receiving processor is configured for transparent transmission of the signal, and the forwarding module is configured to output the signal from a network port in an Ethernet/IP protocol format.

The second safety control mechanism 1004 includes a network communication stack, a second processor, a safety protocol stack, and a second safety input/output interface. An input of the second safety control mechanism 1004 is a data packet in an Ethernet port format. An output of the second safety control mechanism 1004 is a safe output and a non-safety output.

The second safety control mechanism 1004 is configured to parse a non-safety data packet by using Ethernet/IP communication protocol format, parse a safety data packet by using a preset safety communication protocol format (CIP safety), and output a parsed instruction in a format of input/output quantities. The network communication stack is an Ethernet/IP communication stack module, which is configured to filter a data packet into safety data and non-safety data. The network communication stack is configured to send the safety data to the safety protocol stack, and parse the non-safety data into a non-safety instruction. The second processor is configured to configure initialization information of the network protocol stack, collect status information and fault information of each sub-module of the second safety control mechanism 1004, and output a non-safety instruction, such as a reset instruction. The safety protocol stack and the second safety input/output interface are configured to parse the safety data by using the preset safety communication protocol format (CIP safety), and output a parsed instruction safety, such as an emergency stop instruction of a system. An input signal of the network communication stack is a received Ethernet/IP protocol data packet in the form of the network port, and an output signal of the network communication stack is to interact with the execution mechanism in a form of Ethernet/IP protocol and CAN bus protocol to transmit the initialization and other status information, and the fault information and the reset instruction. The safety data packet is transmitted to the safety protocol stack. The safety protocol stack is configured to output a parsed safety instruction signal in a form of input/output quantities via the second safety input/output interface.

The execution mechanism 1006 may include a delay component, a movement controller, a safety driver, a motor and a data encoder. An input of the execution mechanism 1006 is the safety instruction parsed by the second safety control mechanism 1004. An output of the execution mechanism 1006 is an action of the execution mechanism 1006 according to the instruction.

The execution mechanism 1006 is configured to act according to the instruction. When the execution mechanism 1006 receives the emergency stop instruction, the movement controller receives the emergency stop instruction transmitted by the second safety control mechanism 1004, obtains a current moving speed of the mobile device, predicts motor deceleration information according to the current moving speed, and sends the motor deceleration information to the safety driver. The safety driver includes a left safety driver and a right safety driver. According to the motor deceleration information, the left safety driver and the right safety driver are configured to drive a left motor and a right motor to decelerate, respectively. The delay component receives the emergency stop instruction transmitted by the second safety control mechanism 1004 simultaneously, and sends a power-off instruction to the safety driver in a case that a preset delay time is reached. According to the power-off instruction, the left safety driver and the right safety driver drive the left motor and the right motor to power off and brake, respectively. The speed encoder obtains a current rotation speed of the left motor and the right motor, and feeds back the current rotation speed to the movement controller. The movement controller generates alarm information in a case that the current rotation speed does not match a preset rotation speed.

When the reset instruction is received, the motor is powered on and the brake is released, and waits for a new instruction from the control platform. A received wireless signal is transmitted to the movement controller directly for parsing, which is different from a transmission link of the emergency stop instruction. The reset instruction is transmitted from the network protocol stack to the second processor in the second safety control mechanism 1004, and then forwarded to the movement controller. The movement controller sends a motor power-on and brake release instruction to the safety driver, and then the motor is reset. Before receiving a scheduling instruction, the mobile device remains stationary and waits. The second safety control mechanism 1004 outputs the emergency stop instruction in a form of input/output quantities via the second safety input/output interface, and outputs a reset signal in a form of CAN bus protocol. A final system emergency stop response is that the mobile device stops, the motor is powered off and the braked.

The execution mechanism 1006 may include a safety controller, a movement controller, a safety driver, a motor and a data encoder.

When the execution mechanism 1006 receives the emergency stop instruction, the safety controller receives a parsing result of the emergency stop instruction and forwards the parsing result to the movement controller. The movement controller receives the emergency stop instruction, obtains the current moving speed of the mobile device, predicts the motor deceleration information according to the current moving speed, and sends the motor deceleration information to the left safety driver and the right safety driver. The left safety driver and the right safety driver drive the left motor and the right motor to decelerate according to the motor deceleration information. The data encoder obtains the current rotation speed of the motor and feeds back the current rotation speed to the safety controller. The safety controller monitors the motor deceleration information, identifies whether the left motor and the right motor decelerate abnormally according to the current rotation speed, and if the left motor and the right motor decelerate abnormally, sends a power-off instruction to the left safety driver and the right safety driver. The left safety driver and the right safety driver drive the left motor and the right motor to power off and brake according to the power-off instruction.

After receiving the reset instruction, the mobile device jumps out of a system emergency stop state and enters a normal state. If the motor is braked at this time, the mobile device releases the brake, remains stationary and waits for a system scheduling instruction from the control platform. A link of the system scheduling instruction from the control platform to the mobile device does not pass through the second safety control mechanism 1004, a received wireless signal is transmitted to the movement controller directly for parsing, and the link of the system scheduling instruction is not the same as the transmission link of the emergency stop instruction. The reset instruction is sent from the network protocol stack to the second processor of the second safety control mechanism 1004, forwarded to the safety controller and then forwarded to the movement controller. The movement controller sends the reset instruction to the safety driver, and the motor is reset. The mobile device remains stationary until the scheduling instruction is received. The second safety control mechanism 1004 outputs the reset instruction and the emergency stop instruction in a form of an ordinary input/output interface and a safety input/output interface quantities, respectively. The stop of the mobile device is taken as the final system emergency stop response.

Limitations on the scope of the present invention: those skilled in the art may add or replace other components as needed.

It is to be noted that the technical solution of the mobile device and the technical solution of the above-mentioned motion control system belong to the same concept. For details not described in detail in the technical solution of the mobile device, reference may be made to the description of the technical solution of the above-mentioned motion control system.

The above describes the embodiments of the present invention. Other embodiments are within the scope of the appended claims. In some cases, acts or steps recorded in the claims may be performed in an order different from that in the embodiments, and desired results may still achieved. In addition, processes depicted in the drawings do not necessarily require a specific order or the sequential order shown to achieve the desired results. In some implementations, multitasking and parallel processing are also possible or may be advantageous.

It is to be noted that, for the convenience of description, each of the aforementioned method embodiments has been described as a series of combinations of acts, but those skilled in the art is to be aware that the present invention is not limited by the sequence of acts described, because according to the present invention, some steps may be performed in other sequences or at simultaneously. Secondly, those skilled in the art should also be aware that the embodiments described in the present invention are preferred embodiments, and the acts and modules involved are not necessarily required for the present invention.

In the above-mentioned embodiments, the description of each embodiment has its own emphasis. For parts that are not described in detail in an embodiment, reference may be made to the relevant descriptions of other embodiments.

The preferred embodiments of the present invention disclosed above are only used to help illustrate the present invention. Optional embodiments do not describe all the details in detail, nor do they limit the present invention to the embodiments described. Obviously, many modifications and changes may be made according to the contents of the present invention. These embodiments are selected and described in detail in the present invention to better explain the principle and practical application of the present invention, so that those skilled in the art may understand and utilize the present invention well. The present invention is limited only by the appended claims and their full scope and equivalents.

## Claims

1. A motion control system, comprising:
a control platform, and
at least one mobile device, wherein the control platform communicates with each mobile device via at least two communication links;
wherein the control platform is configured to generate an emergency stop instruction in a case that it is detected that a safety event has been triggered, and transmit the emergency stop instruction to the mobile device via a first communication link, wherein the emergency stop instruction complies with a preset safety communication protocol, and the first communication link is a communication link with the preset safety communication protocol among the at least two communication links; and
wherein the mobile device is configured to receive the emergency stop instruction via the first communication link, parse the emergency stop instruction by using the preset safety communication protocol, and execute a shutdown operation according to a parsing result.

2. The system of claim 1, wherein the control platform comprises:
a safety trigger mechanism configured to generate a safety event trigger signal and send the safety event trigger signal to a first safety control mechanism when an event complying with a safety trigger condition is identified; and
the first safety control mechanism configured to receive the safety event trigger signal sent by the safety trigger mechanism, encode the safety event trigger signal by using the preset safety communication protocol to obtain the emergency stop instruction, and transmit the emergency stop instruction to the mobile device via the first communication link.

3. The system of claim 1 or 2, wherein the control platform comprises:
a wireless transmitter configured to forward the emergency stop instruction to a destination port, convert the emergency stop instruction into a wireless signal via the destination port, and transmit the wireless signal to the mobile device, wherein the destination port is a port for data transmission between the control platform and the mobile device via the first communication link.

4. The system of claim 3, wherein the control platform further comprises: a network address translation device;
wherein the wireless transmitter is further configured to send the emergency stop instruction to the network address translation device; and
wherein the network address translation device is configured to perform address translation on the emergency stop instruction, forward an address translated emergency stop instruction to the destination port, and transmit the address translated emergency stop instruction to the mobile device in a form of a wireless signal via the destination port.

5. The system of claim 3, wherein the mobile device comprises:
a wireless receiver configured to receive the wireless signal via the first communication link, and convert the wireless signal to the emergency stop instruction in an Ethernet port format.

6. The system of any one of claims 1, 2 and 5, wherein the mobile device comprises:
a second safety control mechanism configured to parse the emergency stop instruction by using the preset safety communication protocol to obtain the parsing result, and send the parsing result to an execution mechanism; and
the execution mechanism configured to execute the shutdown operation according to the parsing result.

7. The system of claim 6, wherein the execution mechanism comprises: a delay component, a movement controller, a safety driver, a motor and a speed encoder;
wherein the movement controller is configured to obtain a current moving speed of the mobile device in response to the parsing result of the emergency stop instruction, predict motor deceleration information according to the current moving speed, and send the motor deceleration information to the safety driver;
wherein the safety driver is configured to drive the motor to decelerate according to the motor deceleration information;
wherein the delay component is configured to send a power-off instruction to the safety driver in respond to the parsing result of the emergency stop instruction, in a case that a preset delay time is reached;
wherein the safety driver is further configured to drive the motor to power off and brake according to the power-off instruction;
wherein the speed encoder is configured to acquire a current rotation speed of the motor and feed back the current rotation speed to the movement controller; and
wherein the movement controller is further configured to generate alarm information in a case that the current rotation speed does not match a preset rotation speed.

8. The system of claim 7, wherein the execution mechanism further comprises:
a signal converter configured to convert the parsing result of the emergency stop instruction into an initial safety signal that complies with a target safety performance level, and output the initial safety signal to the delay component, wherein the target safety performance level is a safety performance level of the mobile device; and
wherein the delay component is further configured to send the power-off instruction to the safety driver according to the initial safety signal, in the case that the preset delay time is reached.

9. The system of claim 8, wherein the initial safety signal comprises: a first level signal, wherein the first level signal is configured to trigger a safety stop of the mobile device; wherein the execution mechanism further comprises a mode selection component;
wherein the delay component is further configured to send the first level signal to the mode selection component in the case that the preset delay time is reached; and
wherein the mode selection component is configured to send the power-off instruction to the safety driver if the delay component outputs the first level signal, in a case that an automatic mode is selected according to an input mode selection signal.

10. The system of claim 9, wherein the initial safety signal further comprises: a second level signal, wherein the second level signal is configured to maintain a normal operation of the mobile device; and
wherein the delay component is further configured to send the second level signal directly to the mode selection component.

11. The system of claim 9, wherein the execution mechanism further comprises: a manual operator signal interface configured to receive a mode selection signal;
wherein the mode selection component is further configured to switch a control mode of the execution mechanism to a manual mode in response to the mode selection signal; or in the manual mode, switch the control mode of the execution mechanism to the automatic mode in response to an enable switch signal.

12. The system of claim 9, wherein the delay component comprises: a first delay circuit and a second delay circuit;
wherein the signal converter is further configured to output the initial safety signal to the first delay circuit and the second delay circuit, respectively.

13. The system of claim 12, wherein the mode selection component comprises: a first mode selection component and a second mode selection component;
wherein in a case that the first mode selection component selects the automatic mode, an output of the first delay circuit is connected in series with an input of a first emergency stop switch of the mobile device and an output of the second delay circuit, to perform a logical AND operation on a delayed signal of the first delay circuit with a signal of the first emergency stop switch and a delayed signal of the second delay circuit, and a power-off instruction after the logical AND operation is output to the safety driver; or in a case that the first mode selection component selects the manual mode, an output of the first delay circuit is bypassed, and a second level signal is output to the safety driver continuously, wherein the second level signal is configured to maintain a normal operation of the mobile device; and
wherein in a case that the second mode selection component selects the automatic mode, an output of the second delay circuit is connected in series with an input of a second emergency stop switch of the mobile device and an output of the first delay circuit, to perform a logical AND operation on a delayed signal of the second delay circuit with a signal of the second emergency stop switch and a delayed signal of the first delay circuit, and a power-off instruction after the logical AND operation is output to the safety driver; or in a case that the second mode selection component selects the manual mode, an output of the second delay circuit is bypassed, and a second level signal is output to the safety driver continuously.

14. The system of claim 10 or 13, wherein the first level signal is a low level signal; and the second level signal is a high level signal.

15. The system of claim 7, wherein the movement controller is further configured to send a power-on instruction to the safety driver, in a case that a reset instruction forwarded by the second safety control mechanism is received; and
wherein the safety driver is further configured to drive the motor to reset according to the power-on instruction.

16. The system of claim 6, wherein the execution mechanism comprises: a safety controller, a movement controller, a safety driver, a motor and a data encoder;
wherein the safety controller is configured to receive the parsing result of the emergency stop instruction, and forward the parsing result to the movement controller;
wherein the movement controller is configured to obtain a current moving speed of the mobile device in response to the parsing result, predict motor deceleration information according to the current moving speed, and send the motor deceleration information to the safety driver;
wherein the safety driver is configured to drive the motor to decelerate according to the motor deceleration information;
wherein the data encoder is configured to obtain a current rotation speed of the motor and feed back the current rotation speed to the safety controller;
wherein the safety controller is further configured to monitor the motor deceleration information, identify whether a deceleration abnormality occurs in the motor according to the current rotation speed, and if the deceleration abnormality occurs in the motor, send a power-off instruction to the safety driver; and
wherein the safety driver is further configured to drive the motor to power off and brake according to the power-off instruction.

17. The system of claim 16, wherein the safety controller is further configured to forward a reset instruction to the movement controller in a case that the reset instruction forwarded by the second safety control mechanism is received;
wherein the movement controller is further configured to send a power-on instruction to the safety driver in response to the reset instruction; and
wherein the safety driver is further configured to drive the motor to reset according to the power-on instruction.

18. The system of claim 1, wherein the control platform is further configured to generate a scheduling instruction and transmit the scheduling instruction to the mobile device via a second communication link, wherein the scheduling instruction complies with a preset data link communication protocol, and the second communication link is a communication link with the preset data link communication protocol among the at least two communication links; and
wherein the mobile device is further configured to receive the scheduling instruction via the second communication link, parse the scheduling instruction, and execute a scheduling operation according to a parsing result.

19. The system of claim 1, wherein the control platform is further configured to generate a reset instruction in a case that it is detected that a reset event has been triggered, and transmit the reset instruction to the mobile device via the first communication link; and
wherein the mobile device is further configured to receive the reset instruction via the first communication link, parse the reset instruction, and resume operation according to the parsing result.

20. The system of claim 1, wherein the mobile device is further configured to feed back confirmation information to the control platform after receiving the emergency stop instruction;
wherein the control platform is further configured to send a prompt message to the mobile device, in a case that the confirmation information fed back by the mobile device is not received within a preset safety period after the emergency stop instruction is transmitted to the mobile device; and
wherein the mobile device is further configured to execute a shutdown operation in response to the prompt message.

21. A motion control method, applied to a motion control system comprising: a control platform and at least one mobile device, wherein the control platform communicates with each mobile device via at least two communication links; wherein the method comprises:
generating, by the control platform, an emergency stop instruction in a case that it is detected that a safety event has been triggered, and transmitting, by the control platform, the emergency stop instruction to the mobile device via a first communication link, wherein the emergency stop instruction complies with a preset safety communication protocol, and the first communication link is a communication link with the preset safety communication protocol among the at least two communication links; and
receiving, by the mobile device, the emergency stop instruction via the first communication link, parsing, by the mobile device, the emergency stop instruction by using the preset safety communication protocol, and executing, by the mobile device, a shutdown operation according to the parsing result.

22. A motion control method, applied to a control platform, comprising:
generating an emergency stop instruction in a case that it is detected that a safety event has been triggered; and
transmitting the emergency stop instruction to a mobile device via a first communication link, wherein the emergency stop instruction complies with a preset safety communication protocol, and the first communication link is a communication link with the preset safety communication protocol among at least two communication links between the control platform and the mobile device.

23. A motion control method, applied to a mobile device, comprising:
receiving an emergency stop instruction transmitted by a control platform via a first communication link, wherein the first communication link is a communication link with a preset safety communication protocol among at least two communication links between the control platform and the mobile device, and the emergency stop instruction complies with the preset safety communication protocol; and
parsing the emergency stop instruction by using the preset safety communication protocol, and executing a shutdown operation according to a parsing result.
